# EUROPEAN PATENT APPLICATION

(11) **EP 4 475 572 A1**
(43) Date of publication of application: **11.12.2024**
(21) Application number: 23759116.9
(22) Date of filing: 20.02.2023
(51) Int. Cl.: H04W 4/16

(54) **COMMUNICATION METHOD, ELECTRONIC DEVICE, NETWORK DEVICE AND SYSTEM**

(30) Priority: 28.02.2022 CN 202210191233
(71) Applicant: Huawei Technologies Co., Ltd., Shenzhen, Guangdong 518129 (CN)
(72) Inventor: JIN, Hui, Shenzhen, Guangdong 518129 (CN); DOU, Fenghui, Shenzhen, Guangdong 518129 (CN); XUE, Lixia, Shenzhen, Guangdong 518129 (CN)
(74) Representative: Isarpatent
(86) International application number: PCT/CN2023/077132
(87) International publication number: WO 2023/160491

(57) **Abstract**

Embodiments of this application provide a call method, an electronic device, a network device, and a system. The system includes a first electronic device and a second electronic device. A first connection is set up between the first electronic device and the second electronic device, the first electronic device is configured with a subscriber identity module SIM card having a first number, and the second electronic device is configured with a SIM card having a second number. The second electronic device disables a cellular communication function. The first electronic device receives a first message, where the first message indicates a first incoming call. When the first message includes information indicating that the first incoming call is forwarded from the second number, the first electronic device sends a second message to the second electronic device through the first connection. The second electronic device outputs an incoming call notification of the first incoming call based on the second message. According to embodiments of this application, missing of an incoming call can be avoided, power can be saved, and the second electronic device does not need to support a multi-terminal with one number service. A usage scenario is universal.

## Description

This application claims priority to Chinese Patent Application No. 202210191233.9, filed with the China National Intellectual Property Administration on February 28, 2022 and entitled "CALL METHOD, ELECTRONIC DEVICE, NETWORK DEVICE, AND SYSTEM", which is incorporated herein by reference in its entirety.

### TECHNICAL FIELD

This application relates to the field of communication technologies, and in particular, to a call method, an electronic device, a network device, and a system.

### BACKGROUND

An operator activates a multi-terminal with one number service. To be specific, a plurality of terminals have a same number; and when another user dials the number, the plurality of terminals each receive an incoming call request, and a user may answer an incoming call by using any terminal.

To provide better experience for the user, wearable devices such as a smartwatch and a smart band are usually small in volume. However, in this case, a battery capacity is small, and standby time is short. To reduce power consumption and increase the standby time, after a connection is set up between a wearable device and a smartphone that have the same number, the wearable device may disable a modem processor (modem). When the another user dials the number, the wearable device cannot receive the incoming call request, and the user may answer the incoming call by using the smartphone. However, the multi-terminal with one number service has some restrictions. For example, some devices do not support the multi-terminal with one number service, the multi-terminal with one number service is not activated in a part of areas, and the multi-terminal with one number service can be used only after being activated through the operator. A usage scenario is limited, and is not universal. Currently, there is a lack of a universal technical solution that can be used to avoid missing of an incoming call for the wearable device.

### SUMMARY

Embodiments of this application disclose a call method, an electronic device, a network device, and a system, to avoid missing of an incoming call for a wearable device, and the wearable device does not need to support a multi-terminal with one number service. A usage scenario is universal.

According to a first aspect, an embodiment of this application provides a call method, applied to a first electronic device, where a first connection is set up between the first electronic device and a second electronic device, the first electronic device is configured with a subscriber identity module SIM card having a first number, the second electronic device is configured with a SIM card having a second number, and the method includes: receiving a first message, where the first message indicates a first incoming call; and when the first message satisfies a first condition: sending a second message to the second electronic device through the first connection, where the second message is for outputting an incoming call notification of the first incoming call on the second electronic device; and skipping, by the first electronic device, outputting the incoming call notification of the first incoming call, where the first condition includes that the first message includes first information indicating that the first incoming call is forwarded from the second number.

In some embodiments, the second electronic device disables a cellular communication function.

In some embodiments, the second electronic device is a wearable device.

In the foregoing method, the numbers of the first electronic device and the second electronic device are different. That is, these devices do not need to support a multi-terminal with one number service. In such a universal usage scenario, even if the second electronic device disables the cellular communication function to reduce power consumption, the first electronic device may receive, via the first electronic device, the first incoming call forwarded from the second number, to avoid missing of the incoming call. On this basis, when the first electronic device receives the first incoming call forwarded from the second number, the incoming call notification may be output on the second electronic device having the second number, and the first electronic device does not output the incoming call notification, to further ensure privacy security of a user, reduce power consumption of the first electronic device, better satisfy a user requirement, particularly well applicable to a specific scenario in which the user carries the second electronic device but does not carry the first electronic device (for example, a scenario in which the user carries a smartwatch but does not carry a mobile phone for running outside), and has higher practicability.

In a possible implementation, the method further includes: when the first message does not satisfy the first condition, outputting the incoming call notification of the first incoming call on the first electronic device.

In the foregoing method, when receiving the incoming call forwarded from the second number, the first electronic device does not output the incoming call notification, but the incoming call notification is output on the second electronic device. The first electronic device outputs an incoming call notification only when receiving an incoming call for the first number. In other words, a device corresponding to an actual called number outputs an incoming call notification, and the user may directly determine the called number by using the device that outputs the incoming call notification. This is more convenient to use.

In a possible implementation, the method further includes: before the receiving a first message, receiving a third message, where the third message includes the second number; and before the receiving a first message, sending the first number.

In some embodiments, the third message is for requesting to manage the incoming call for the second number.

In some embodiments, the third message is for requesting to implement a call forwarding configuration: forwarding the incoming call for the second number to the first number.

In a possible implementation, the receiving a third message includes: receiving the third message sent by the second electronic device through the first connection; and the sending the first number includes: sending the first number to the second electronic device through the first connection.

In the foregoing method, the first electronic device and the second electronic device may directly obtain the communication numbers of each other through the first connection, to implement the call forwarding configuration (forwarding the incoming call for the second number to the first number). Signaling interworking is simple, and device power consumption is low.

In a possible implementation, the receiving a third message includes: receiving the third message sent by a first network device; and the sending the first number includes: sending the first number to the first network device, where the first network device is configured to send the first number to the second electronic device.

In some embodiments, the first network device may provide the first electronic device with a service for managing the second electronic device. For example, the first network device may be a server.

In the foregoing method, the first electronic device and the second electronic device may obtain the communication numbers of each other via the first network device. This may be understood as performing, by using the first network device, security management on a process of obtaining the first number and the second number, to avoid a case in which a malicious user illegally obtains the communication numbers when the communication numbers are obtained directly through the first connection, thereby protecting privacy security of the user.

In a possible implementation, the receiving the third message sent by a first network device includes: when a first address is a preset trusted address, receiving the third message sent by the first network device, where the first address is a communication address that is of the first electronic device and that is for implementing the first connection.

In some embodiments, when determining that the first address sent by the second electronic device is the trusted address, the first network device sends the third message to the first electronic device. In some other embodiments, when determining that the first address is the trusted address, the second electronic device sends the first address to the first network device, and the first network device sends the third message to the first electronic device after receiving the first address. Optionally, the trusted address is sent by the first network device to the second electronic device.

In some embodiments, the first connection is a Bluetooth connection, and the first address is a Bluetooth address of the first electronic device.

In the foregoing method, only when the first address of the first electronic device is the trusted address, does the first electronic device receive the second number that is of the second electronic device and that is sent by the first network device, and send the first number to the second electronic device via the first network device, to avoid a case in which the malicious user illegally obtains the first number and the second number, and further ensures the privacy security of the user.

In a possible implementation, the trusted address is a communication address of a call forwarding target device set by a user.

In the foregoing method, only when the user allows the first electronic device to be used as a call forwarding target device of the second electronic device, does the first electronic device receive the second number that is of the second electronic device and that is sent by the first network device, and send the first number to the second electronic device via the first network device, to avoid the case in which the malicious user illegally obtains the first number and the second number, and further ensure the privacy security of the user.

In a possible implementation, the method further includes: sending a fourth message to the first network device, where the fourth message includes the first number and the first address, and the first address is the communication address that is of the first electronic device and that is for implementing the first connection.

In some embodiments, after receiving the fourth message, the first network device may set the first address to the trusted address.

In the foregoing method, only when the first electronic device is a device "known" to the first network device, does the first electronic device receive the second number that is of the second electronic device and that is sent by the first network device, and send the first number to the second electronic device via the first network device, to avoid the case in which the malicious user illegally obtains the first number and the second number, and further ensure the privacy security of the user.

In a possible implementation, the first information is a history targeted uniform resource identifier hi-targeted-to-uri or a redirecting party binary-coded decimal number redirecting party BCD number.

In a possible implementation, the third message further includes a call forwarding type.

In some embodiments, the third message includes second information, the second information indicates the call forwarding type, and the second information is a history target parameter hi-target-param or a facility (Facility).

In a possible implementation, the call forwarding type included in the third message is a first type, and the first condition further includes that a call forwarding type included in the first message is the first type.

In the foregoing method, the first electronic device may further determine, when determining that the received first incoming call is forwarded from the second number, whether a call forwarding type corresponding to the first incoming call is the pre-agreed first type, and the incoming call notification is output on the second electronic device only when a determining result is yes, to better satisfy an actual requirement of the user.

In a possible implementation, the method further includes: when the first message satisfies the first condition, and the first connection is broken, outputting the incoming call notification of the first incoming call or rejecting the first incoming call on the first electronic device.

In the foregoing method, when the first message satisfies the first condition, and the first connection is broken, that is, the second electronic device cannot be notified of the incoming call, the first electronic device may output the incoming call notification, to avoid missing of the incoming call for the second electronic device.

In a possible implementation, the method further includes: receiving a first user operation, where the first user operation is for disabling a communication function for implementing the first connection; and outputting prompt information in response to the first user operation.

In some embodiments, the first connection is a Bluetooth connection, and the first user operation is for disabling a Bluetooth function.

In the foregoing method, when the user operation for disabling the communication function for implementing the first connection is received, the prompt information may be output, for example, to prompt the user with a case in which a call forwarding configuration (forwarding the incoming call for the second number to the first number) will be invalid due to disabling of the communication function, so that a case in which the call forwarding configuration is invalid due to a misoperation of the user is avoided, and user experience is better.

In a possible implementation, the first electronic device is further configured with a SIM card having a third number, and the method further includes: receiving a second user operation, where the second user operation is for selecting the first number from the first number and the third number.

In the foregoing method, when the first electronic device includes a plurality of communication numbers, the first number used as a call forwarding target number may be selected by the user based on an actual requirement, so that use is more flexible, and experience is better.

In a possible implementation, the method further includes: before the receiving a first message, storing a first configuration, where the first configuration is sending, to the second electronic device through the first connection, indication information corresponding to the incoming call forwarded from the second number.

According to a second aspect, an embodiment of this application provides another call method, applied to a second electronic device, where a first connection is set up between the second electronic device and a first electronic device, the first electronic device is configured with a subscriber identity module SIM card having a first number, the second electronic device is configured with a SIM card having a second number, and the method includes: when the first electronic device receives a first message, and the first message satisfies a first condition, receiving a second message sent by the first electronic device through the first connection, where the first message indicates a first incoming call, and the first condition includes that the first message includes information indicating that the first incoming call is forwarded from the second number; and outputting an incoming call notification of the first incoming call based on the second message.

In the foregoing method, the numbers of the first electronic device and the second electronic device are different. That is, these devices do not need to support a multi-terminal with one number service. In such a universal usage scenario, even if the second electronic device disables a cellular communication function to reduce power consumption, the first electronic device may receive, via the first electronic device, the first incoming call forwarded from the second number, to avoid missing of the incoming call.

In a possible implementation, the method further includes: before the receiving a second message sent by the first electronic device through the first connection, receiving the first number; sending a third message to a first network device, where the third message includes the first number, the third message is for requesting to implement a first configuration, and the first configuration includes a call forwarding configuration for forwarding an incoming call for the second number to the first number; and disabling a cellular communication function.

In some embodiments, the first network device is an access network device, for example, a base station, user equipment, an access point, a transmission reception point, or a relay device.

In a possible implementation, the receiving the first number includes: receiving the first number sent by the first electronic device through the first connection; and the method further includes: before the receiving a second message sent by the first electronic device through the first connection, sending the second number to the first electronic device through the first connection.

In the foregoing method, the first electronic device and the second electronic device may directly obtain the communication numbers of each other through the first connection, to implement the call forwarding configuration (forwarding the incoming call for the second number to the first number). Signaling interworking is simple, and device power consumption is low.

In a possible implementation, the method further includes: before the receiving the first number, sending a fourth message to a second network device, where the fourth message includes a first address, the first address is a communication address that is of the first electronic device and that is for implementing the first connection, and the second network device is configured to send the second number to the first electronic device after receiving the fourth message; and the receiving the first number includes: receiving the first number sent by the second network device.

In some embodiments, the second network device may provide the first electronic device with a service for managing the second electronic device. For example, the second network device may be a server.

In the foregoing method, the first electronic device and the second electronic device may obtain the communication numbers of each other via the second network device. This may be understood as performing, by using the second network device, security management on a process of obtaining the first number and the second number, to avoid a case in which a malicious user illegally obtains the communication numbers when the communication numbers are obtained directly through the first connection, thereby protecting privacy security of the user.

In a possible implementation, the method further includes: receiving a trusted address sent by the second network device; and the sending a fourth message to a second network device includes: when the first address is the trusted address, sending the fourth message to the second network device.

In the foregoing method, only when determining that the first address of the first electronic device is the trusted address, does the second electronic device send the second number to the first electronic device via the second network device, and obtain the first number via the second network device, to avoid the case in which the malicious user illegally obtains the first number and the second number, and further ensure the privacy security of the user.

In a possible implementation, the trusted address is a communication address of a call forwarding target device set by a user.

In the foregoing method, only when the user allows the first electronic device to be used as a call forwarding target device of the second electronic device, does the second electronic device send the second number to the first electronic device via the second network device, and obtain the first number via the second network device, to avoid the case in which the malicious user illegally obtains the first number and the second number, and further ensure the privacy security of the user.

In a possible implementation, the method further includes: sending a fifth message to the second network device, where the fifth message includes a second address and the second number, and the second address is a communication address that is of the second electronic device and that is for implementing the first connection.

In some embodiments, the first connection is a Bluetooth connection, and the second address is a Bluetooth address of the second electronic device.

In the foregoing method, only when the second electronic device is a device "known" to the second network device, can the second electronic device send the second number to the first electronic device via the second network device, and obtain the first number via the second network device, to avoid the case in which the malicious user illegally obtains the first number and the second number, and further ensure the privacy security of the user.

In a possible implementation, the method further includes: when duration for which the first connection is broken exceeds preset duration, enabling the cellular communication function, and sending a sixth message to the first network device, where the sixth message is for requesting to cancel the first configuration.

In the foregoing method, when the first connection between the second electronic device and the first electronic device is broken for specific duration, the cellular communication function may be enabled, and the first configuration may be canceled, to avoid missing of the incoming call for the second number.

In a possible implementation, the method further includes: receiving a first user operation, where the first user operation is for disabling a communication function for implementing the first connection; and outputting first prompt information in response to the first user operation.

In the foregoing method, when the user operation for disabling the communication function for implementing the first connection is received, the prompt information may be output, for example, to prompt a user with a case in which a call forwarding configuration (forwarding the incoming call for the second number to the first number) will be invalid due to disabling of the communication function, so that a case in which the call forwarding configuration is invalid due to a misoperation of the user is avoided, and user experience is better.

In a possible implementation, the method further includes: receiving a second user operation, where the second user operation is for setting up a second connection between the second electronic device and a third electronic device; and outputting second prompt information in response to the second user operation.

In the foregoing method, when a connection is set up between the second electronic device and another electronic device, the prompt information may be output, and a user may choose, based on an actual requirement, whether to change a call forwarding target device, so that use is more flexible, and user experience is better.

In a possible implementation, the third electronic device is configured with a SIM card having a third number, and the method further includes: receiving a third user operation; and in response to the third user operation, enabling the cellular communication function, and sending a seventh message to the first network device, where the seventh message is for requesting to implement a second configuration, and the second configuration includes a call forwarding configuration for forwarding the incoming call for the second number to the third number.

In the foregoing method, when the connection is set up between the second electronic device and the another electronic device, the user may change the call forwarding target device to the another electronic device, so that the call forwarding configuration is flexibly changed, and user experience is better.

According to a third aspect, an embodiment of this application provides another call method, applied to a first electronic device, where a first connection is set up between the first electronic device and a second electronic device, the first electronic device is configured with a subscriber identity module SIM card having a first number, the second electronic device is configured with a SIM card having a second number, and the method includes: receiving a first message sent by a first network device, where the first message includes the second number; sending the first number to the second electronic device, or sending the first number to the first network device, where the first network device is configured to send the first number to the second electronic device; receiving a second message, where the second message indicates a first incoming call; and when the second message satisfies a first condition: sending a third message to the second electronic device through the first connection, where the third message is for outputting an incoming call notification of the first incoming call on the second electronic device; and skipping, by the first electronic device, outputting the incoming call notification of the first incoming call, where the first condition includes that the second message includes first information indicating that the first incoming call is forwarded from the second number.

In some embodiments, the first network device may provide the first electronic device with a service for managing the second electronic device. For example, the first network device may be a server.

In the foregoing method, the first electronic device may obtain the second number of the second electronic device via the first network device, and the second electronic device is enabled to obtain the first number on this basis. This may be understood as performing, by using the first network device, security management on a process of obtaining the first number and the second number, to avoid a case in which a malicious user illegally obtains the communication numbers when the communication numbers are obtained directly through the first connection, thereby ensuring privacy security of the user.

In a possible implementation, the receiving a first message sent by a first network device includes: when a first address is a preset trusted address, receiving the first message sent by the first network device, where the first address is a communication address that is of the first electronic device and that is for implementing the first connection.

In some embodiments, when determining that the first address sent by the second electronic device is the trusted address, the first network device sends the third message to the first electronic device. In some other embodiments, when determining that the first address is the trusted address, the second electronic device sends the first address to the first network device, and the first network device sends the third message to the first electronic device after receiving the first address. Optionally, the trusted address is sent by the first network device to the second electronic device.

In the foregoing method, only when the first address of the first electronic device is the trusted address, does the first electronic device receive the second number that is of the second electronic device and that is sent by the first network device, and is the second electronic device enabled to obtain the first number, to avoid the case in which the malicious user illegally obtains the first number and the second number, and further ensure the privacy security of the user.

In a possible implementation, the trusted address is a communication address of a call forwarding target device set by a user.

In the foregoing method, only when the user allows the first electronic device to be used as a call forwarding target device of the second electronic device, does the first electronic device receive the second number that is of the second electronic device and that is sent by the first network device, and is the second electronic device enabled to obtain the first number, to avoid the case in which the malicious user illegally obtains the first number and the second number, and further ensure the privacy security of the user.

In a possible implementation, the method further includes: sending a fourth message to the first network device, where the fourth message includes the first number and the first address, and the first address is the communication address that is of the first electronic device and that is for implementing the first connection.

In some embodiments, after receiving the fourth message, the first network device may set the first address to the trusted address.

In the foregoing method, only when the first electronic device is a device "known" to the first network device, does the first electronic device receive the second number that is of the second electronic device and that is sent by the first network device, and is the second electronic device enabled to obtain the first number, to avoid the case in which the malicious user illegally obtains the first number and the second number, and further ensure the privacy security of the user.

In a possible implementation, the first information is a history targeted uniform resource identifier hi-targeted-to-uri or a redirecting party binary-coded decimal number redirecting party BCD number.

In a possible implementation, the first message further includes a call forwarding type.

In some embodiments, the first message includes second information, the second information indicates the call forwarding type, and the second information is a history target parameter hi-target-param or a facility (Facility).

In a possible implementation, the call forwarding type included in the first message is a first type, and the first condition further includes that a call forwarding type included in the second message is the first type.

In the foregoing method, the first electronic device may further determine, when determining that the received first incoming call is forwarded from the second number, whether a call forwarding type corresponding to the first incoming call is the pre-agreed first type, and the incoming call notification is output on the second electronic device only when a determining result is yes, to better satisfy an actual requirement of the user.

In a possible implementation, the method further includes: when the second message satisfies the first condition, and the first connection is broken, outputting the incoming call notification of the first incoming call or rejecting the first incoming call on the first electronic device.

In the foregoing method, when the second message satisfies the first condition, and the first connection is broken, that is, the second electronic device cannot be notified of the incoming call, the first electronic device may output the incoming call notification, to avoid missing of the incoming call for the second electronic device.

In a possible implementation, the method further includes: when the second message does not satisfy the first condition, outputting the incoming call notification of the first incoming call on the first electronic device.

In some embodiments, when the second message satisfies the first condition, the first electronic device does not output the incoming call notification of the first incoming call.

In some embodiments, the second electronic device is a wearable device.

In the foregoing method, when receiving the incoming call forwarded from the second number, the first electronic device does not output the incoming call notification, but the incoming call notification is output on the second electronic device, to further ensure the privacy security of the user, reduce power consumption of the first electronic device, better satisfy a user requirement, particularly well applicable to a specific scenario in which the user carries the second electronic device but does not carry the first electronic device (for example, a scenario in which the user carries a smartwatch but does not carry a mobile phone for running outside), and has higher practicability. In addition, the first electronic device outputs an incoming call notification only when receiving an incoming call for the first number. In other words, a device corresponding to an actual called number outputs an incoming call notification, and the user may directly determine the called number by using the device that outputs the incoming call notification. This is more convenient to use.

In a possible implementation, the method further includes: receiving a first user operation, where the first user operation is for disabling a communication function for implementing the first connection; and outputting prompt information in response to the first user operation.

In the foregoing method, when the user operation for disabling the communication function for implementing the first connection is received, the prompt information may be output, for example, to prompt the user with a case in which a call forwarding configuration (forwarding the incoming call for the second number to the first number) will be invalid due to disabling of the communication function, so that a case in which the call forwarding configuration is invalid due to a misoperation of the user is avoided, and user experience is better.

In a possible implementation, the first electronic device is further configured with a SIM card having a third number, and the method further includes: receiving a second user operation, where the second user operation is for selecting the first number from the first number and the third number.

In the foregoing method, when the first electronic device includes a plurality of communication numbers, the first number used as a call forwarding target number may be selected by the user based on an actual requirement, so that use is more flexible, and experience is better.

In a possible implementation, the method further includes: before the receiving a second message, storing a first configuration, where the first configuration is sending, to the second electronic device through the first connection, indication information corresponding to the incoming call forwarded from the second number.

According to a fourth aspect, an embodiment of this application provides another call method, applied to a second electronic device, where a first connection is set up between the second electronic device and a first electronic device, the first electronic device is configured with a subscriber identity module SIM card having a first number, the second electronic device is configured with a SIM card having a second number, and the method includes: sending a first message to a first network device, where the first message includes a first address, and the first address is a communication address that is of the first electronic device and that is for implementing the first connection; receiving the first number sent by the second electronic device through the first connection, or receiving the first number sent by the first network device; when the first electronic device receives a second message, and the second message satisfies a first condition, receiving a third message sent by the first electronic device through the first connection, where the second message indicates a first incoming call, and the first condition includes that the second message includes information indicating that the first incoming call is forwarded from the second number; and outputting an incoming call notification of the first incoming call based on the third message.

In some embodiments, the first network device may provide the first electronic device with a service for managing the second electronic device. For example, the first network device may be a server.

In some embodiments, the first network device is configured to send the second number to the first electronic device after receiving the first message.

In the foregoing method, the second electronic device may send the first message including the first address to the first network device, to obtain the first number of the first electronic device, and enable the first electronic device to obtain the second number. This may be understood as performing, by using the first network device, security management on a process of obtaining the first number and the second number, to avoid a case in which a malicious user illegally obtains the communication numbers when the communication numbers are obtained directly through the first connection, thereby ensuring privacy security of the user.

In a possible implementation, the method further includes: receiving a trusted address sent by the first network device; and the sending a first message to a first network device includes: when the first address is the trusted address, sending the first message to the first network device.

In the foregoing method, the second electronic device sends the first message to the first network device only when determining that the first address of the first electronic device is the trusted address, to obtain the first number of the first electronic device, and enable the first electronic device to obtain the second number, thereby avoiding the case in which the malicious user illegally obtains the first number and the second number, and further ensuring the privacy security of the user.

In a possible implementation, the trusted address is a communication address of a call forwarding target device set by a user.

In the foregoing method, the second electronic device sends the first message to the first network device only when the user allows the first electronic device to be used as a call forwarding target device of the second electronic device, to obtain the first number of the first electronic device, and enable the first electronic device to obtain the second number, thereby avoiding the case in which the malicious user illegally obtains the first number and the second number, and further ensuring the privacy security of the user.

In a possible implementation, the method further includes: before the receiving a third message sent by the first electronic device through the first connection, sending a fourth message to a second network device, where the fourth message includes the first number, the fourth message is for requesting to implement a first configuration, and the first configuration includes a call forwarding configuration for forwarding an incoming call for the second number to the first number; and disabling a cellular communication function.

In some embodiments, the second network device is an access network device, for example, a base station, user equipment, an access point, a transmission reception point, or a relay device.

In a possible implementation, the method further includes: when duration for which the first connection is broken exceeds preset duration, enabling the cellular communication function, and sending a fifth message to the second network device, where the fifth message is for requesting to cancel the first configuration.

In the foregoing method, when the first connection between the second electronic device and the first electronic device is broken for specific duration, the cellular communication function may be enabled, and the first configuration may be canceled, to avoid missing of the incoming call for the second number.

In a possible implementation, the method further includes: sending a sixth message to the first network device, where the sixth message includes the second number and a second address, and the second address is a communication address that is of the second electronic device and that is for implementing the first connection.

In the foregoing method, only when the second electronic device is a device "known" to a second network device, can the second electronic device obtain the first number of the first electronic device by sending the first message to the first network device, and is the first electronic device enabled to obtain the second number, to avoid the case in which the malicious user illegally obtains the first number and the second number, and further ensure the privacy security of the user.

In a possible implementation, the method further includes: receiving a first user operation, where the first user operation is for disabling a communication function for implementing the first connection; and outputting first prompt information in response to the first user operation.

In the foregoing method, when the user operation for disabling the communication function for implementing the first connection is received, the prompt information may be output, for example, to prompt the user with a case in which a call forwarding configuration (forwarding the incoming call for the second number to the first number) will be invalid due to disabling of the communication function, so that a case in which the call forwarding configuration is invalid due to a misoperation of the user is avoided, and user experience is better.

In a possible implementation, the method further includes: receiving a second user operation, where the second user operation is for setting up a second connection between the second electronic device and a third electronic device; and outputting second prompt information in response to the second user operation.

In the foregoing method, when a connection is set up between the second electronic device and another electronic device, the prompt information may be output, and the user may choose, based on an actual requirement, whether to change a call forwarding target device, so that use is more flexible, and user experience is better.

In a possible implementation, the third electronic device is configured with a SIM card having a third number, and the method further includes: receiving a third user operation; and in response to the third user operation, enabling the cellular communication function, and sending a seventh message to the second network device, where the seventh message is for requesting to implement a second configuration, and the second configuration includes a call forwarding configuration for forwarding the incoming call for the second number to the third number.

In the foregoing method, when the connection is set up between the second electronic device and the another electronic device, the user may change the call forwarding target device to the another electronic device, so that the call forwarding configuration is flexibly changed, and user experience is better.

According to a fifth aspect, an embodiment of this application provides another call method, applied to a first electronic device, where a first connection is set up between the first electronic device and a second electronic device, the first electronic device is configured with a subscriber identity module SIM card having a first number, the second electronic device is configured with a SIM card having a second number, and the method includes: receiving a first message, where the first message indicates a first incoming call; and when the first message satisfies a first condition: sending a second message to the second electronic device through the first connection, where the second message is for outputting an incoming call notification of the first incoming call on the second electronic device, and the first condition includes that the first message includes first information indicating that the first incoming call is forwarded from the second number.

The call method in the fifth aspect may reference the call method provided in any one of the first aspect, the third aspect, or the implementations of the first aspect and the third aspect.

According to a sixth aspect, an embodiment of this application provides another call method, applied to a second electronic device, where a first connection is set up between the second electronic device and a first electronic device, the first electronic device is configured with a subscriber identity module SIM card having a first number, the second electronic device is configured with a SIM card having a second number, and the method includes: when the first electronic device receives a first message, and the first message satisfies a first condition, receiving a second message sent by the first electronic device through the first connection, where the first message indicates a first incoming call, and the first condition includes that the first message includes information indicating that the first incoming call is forwarded from the second number; and outputting an incoming call notification of the first incoming call based on the second message.

The call method in the sixth aspect may reference the call method provided in any one of the second aspect, the fourth aspect, or the implementations of the second aspect and the fourth aspect.

According to a seventh aspect, an embodiment of this application provides an electronic device, including a transceiver, a processor, and a memory. The memory is configured to store computer program code. The computer program code includes computer instructions. The processor invokes the computer instructions to enable the electronic device to perform the call method provided in any one of the first aspect, the third aspect, the fifth aspect, or the implementations of the first aspect, the third aspect, and the fifth aspect of embodiments of this application.

According to an eighth aspect, an embodiment of this application provides an electronic device, including a transceiver, a processor, and a memory. The memory is configured to store computer program code. The computer program code includes computer instructions. The processor invokes the computer instructions to enable the user equipment to perform the call method provided in any one of the second aspect, the fourth aspect, the sixth aspect, or the implementations of the second aspect, the fourth aspect, and the sixth aspect of embodiments of this application.

According to a ninth aspect, an embodiment of this application provides a communication apparatus. The apparatus may be a device or a chip in the device. The communication apparatus includes a processing unit. The processing unit is configured to perform the call method provided in any one of the first aspect to the sixth aspect or the implementations of the first aspect to the sixth aspect of embodiments of this application.

According to a tenth aspect, an embodiment of this application provides a computer storage medium. The computer storage medium stores a computer program. The computer program includes program instructions. When the program instructions are executed by a processor, the call method provided in any one of the first aspect to the sixth aspect or the implementations of the first aspect to the sixth aspect of embodiments of this application is performed.

According to an eleventh aspect, an embodiment of this application provides a computer program product. When the computer program product runs on a communication device, the communication device is enabled to perform the call method provided in any one of the first aspect to the sixth aspect or the implementations of the first aspect to the sixth aspect of embodiments of this application.

According to a twelfth aspect, an embodiment of this application provides an electronic device. The electronic device includes an apparatus for performing the method described in any embodiment of this application. For example, the electronic device is a chip.

It should be understood that descriptions of technical features, technical solutions, beneficial effects, or similar languages in this application do not imply that all features and advantages can be implemented in any single embodiment. On the contrary, it may be understood that descriptions of features or beneficial effects indicate that at least one embodiment includes specific technical features, technical solutions, or beneficial effects. Therefore, descriptions of technical features, technical solutions, or beneficial effects in this specification do not necessarily refer to a same embodiment. Further, the technical features, technical solutions, and beneficial effects described in embodiments may be combined in any appropriate manner. A person skilled in the art may understand that an embodiment may be implemented without one or more specific technical features or technical solutions, or beneficial effect in a specific embodiment. In other embodiments, additional technical features and beneficial effects may also be identified in specific embodiments that do not reflect all embodiments.

### BRIEF DESCRIPTION OF DRAWINGS

The following describes accompanying drawings used in embodiments of this application.
FIG. 1A is a diagram of an architecture of a call system according to an embodiment of this application;
FIG. 1B is a diagram of an architecture of another call system according to an embodiment of this application;
FIG. 2A is a diagram of a hardware structure of an electronic device according to an embodiment of this application;
FIG. 2B is a diagram of a hardware structure of another electronic device according to an embodiment of this application;
FIG. 2C is a diagram of a hardware structure of a server according to an embodiment of this application;
FIG. 2D is a diagram of a software architecture of an electronic device according to an embodiment of this application;
FIG. 3A is a diagram of a user interface embodiment according to embodiments of this application;
FIG. 3B is a diagram of another user interface embodiment according to embodiments of this application;
FIG. 3C is a diagram of another user interface embodiment according to embodiments of this application;
FIG. 3D-1 and FIG. 3D-2 are a diagram of another user interface embodiment according to embodiments of this application;

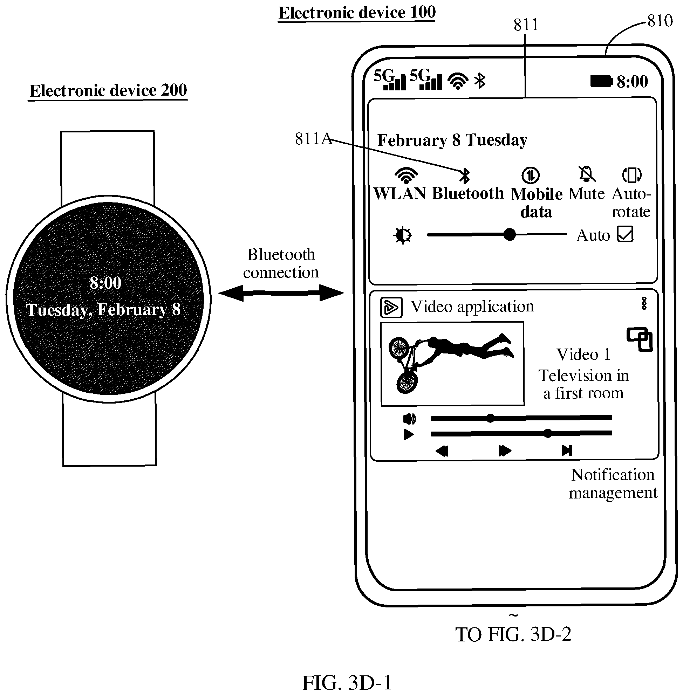

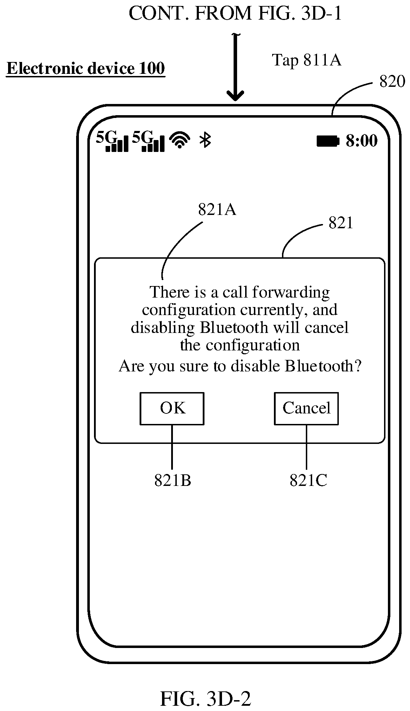

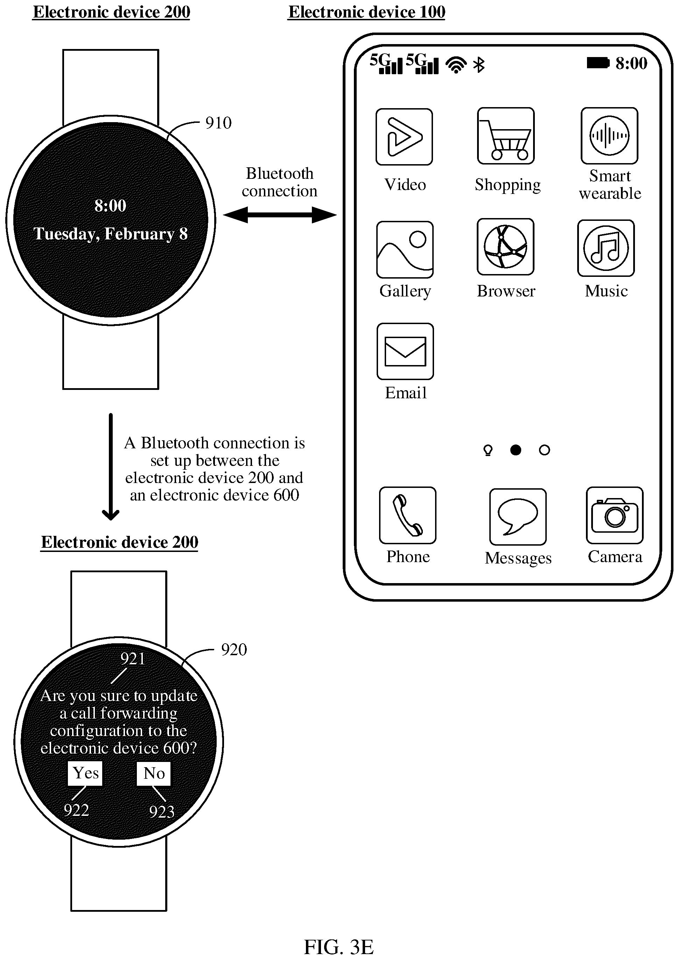

FIG. 3E is a diagram of another user interface embodiment according to embodiments of this application;

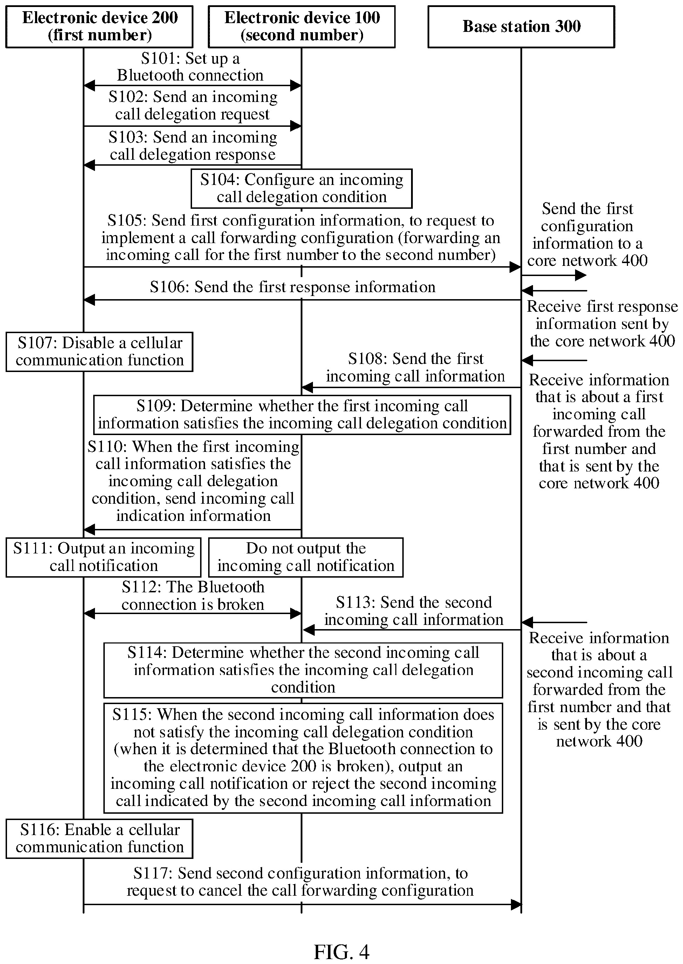

FIG. 4 is a schematic flowchart of a call method according to an embodiment of this application;

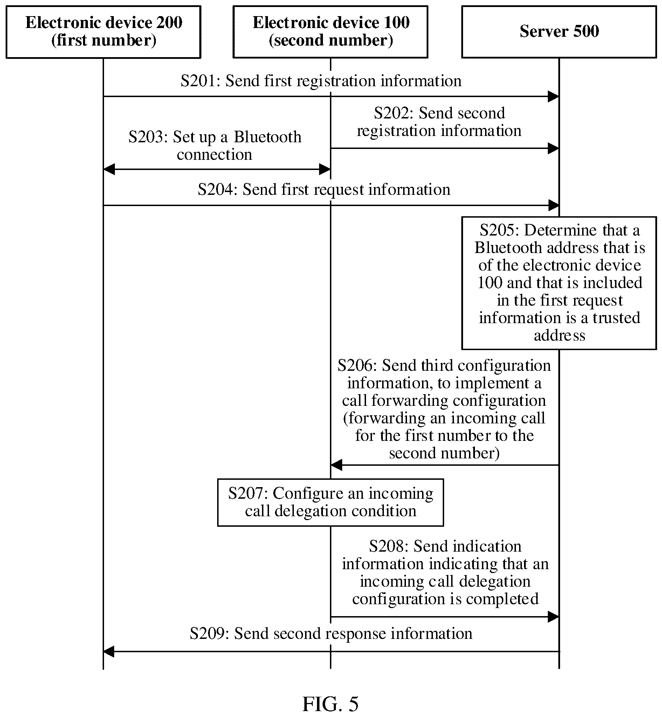

FIG. 5 is a schematic flowchart of another call method according to an embodiment of this application;

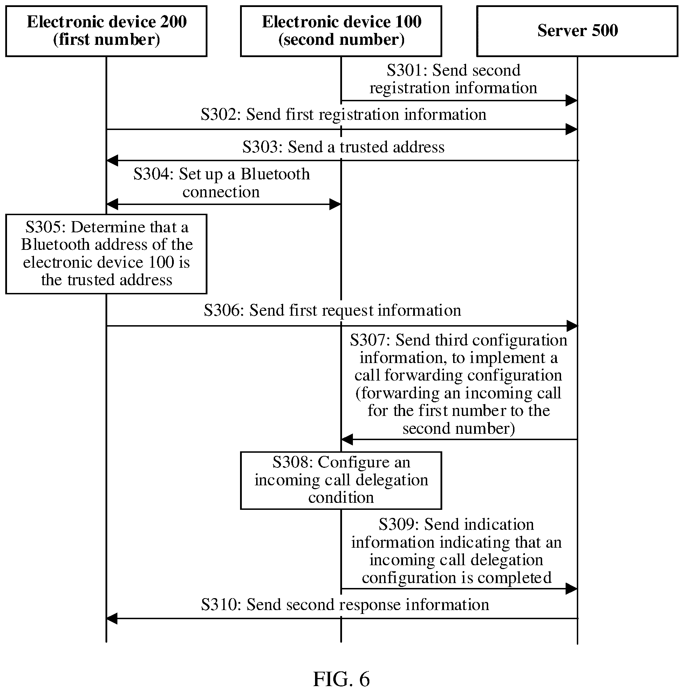

FIG. 6 is a schematic flowchart of another call method according to an embodiment of this application; and

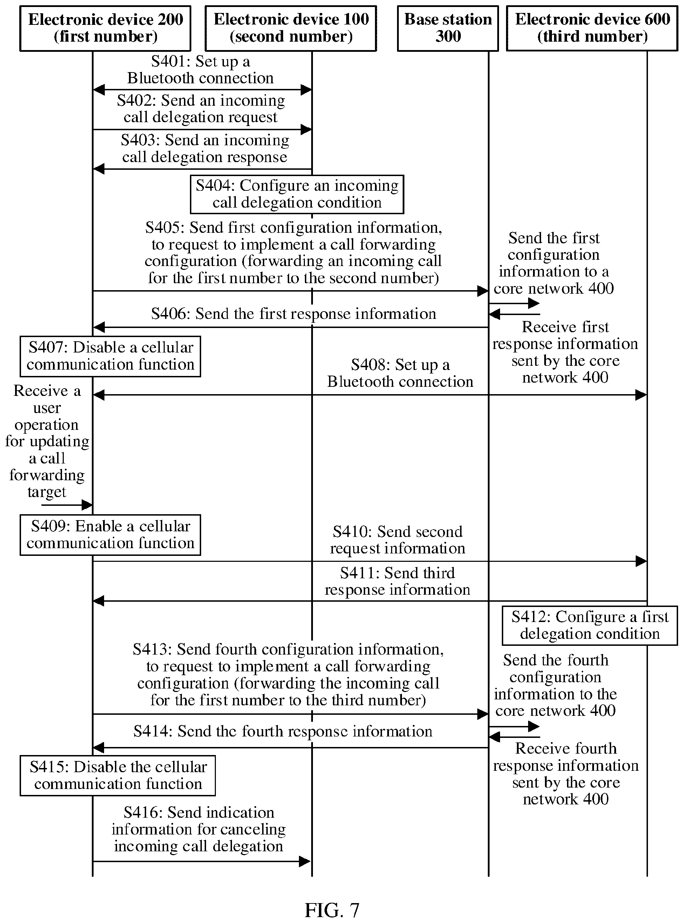

FIG. 7 is a schematic flowchart of another call method according to an embodiment of this application.

### DESCRIPTION OF EMBODIMENTS

The technical solutions in embodiments of this application are clearly described below with reference to the accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

Terms "first" and "second" below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments of this application, unless otherwise specified, "a plurality of" means two or more than two.

In this application, an electronic device may be configured with a subscriber identity module (subscriber identity module, SIM) card. The SIM card may be a smart card configured to store user identity identification data, short message service message data, and a phone number. One SIM card usually has one phone number. The SIM card may be a universal subscriber identity module (universal subscriber identity module, USIM) card, an embedded-SIM (embedded-SIM, eSIM) card, a software SIM card, or the like. The electronic device may interact with a network by using the SIM card, to implement functions such as a call and data communication. The SIM card may be used in, but not limited to, a wireless network such as a global system for mobile communications (global system for mobile communications, GSM), code division multiple access (code division multiple access, CDMA), wideband code division multiple access (wideband code division multiple access, WCDMA), time division-synchronous code division multiple access (time division-synchronous code division multiple access, TD-SCDMA), long term evolution (long term evolution, LTE), and new radio (new radio, NR).

Different electronic devices usually have different phone numbers. However, currently, an operator activates a multi-terminal with one number service. To be specific, a plurality of terminals have a same number. For example, a SIM card of a smartwatch and a SIM card of a smartphone have the same phone number. If a user intends to use the multi-terminal with one number service, the following three conditions need to be satisfied: The multi-terminal with one number service is activated through the operator; the smartwatch needs to support the eSIM card; and the multi-terminal with one number service has been activated in a current area. After the user activates the multi-terminal with one number service for the smartphone and the smartwatch, the operator downloads information about the SIM card of the smartphone to the eSIM card of the smartwatch, to ensure that the smartphone and the smartwatch have the same number. When another user dials the number, the smartphone and the smartwatch each receive an incoming call request, and the user may answer an incoming call by using any device.

To provide better experience for the user, wearable devices such as the smartwatch and the smart band are usually small in volume. However, in this case, a battery capacity is small, and standby time is short. A wearable device configured with the SIM card usually includes a modem processor (modem). Power consumption of the modem is large, and usually accounts for 70% to 80% of power consumption of the wearable device. How to reduce the power consumption of the modem of the wearable device is a problem of concern in the industry.

In a technical solution, to reduce the power consumption of the wearable device and increase the standby time, after a connection (for example, Bluetooth, wireless fidelity (wireless fidelity, Wi-Fi), or a sidelink (sidelink)) is set up between the wearable device and an electronic device (assumed to be the smartphone) that have the same number, the wearable device may disable the modem. When the another user dials the number, the wearable device cannot receive the incoming call request, and the user may answer the incoming call by using the smartphone. After the foregoing connection is broken, the wearable device may enable the modem. If the another user dials the number, the wearable device and the smartphone each may receive the incoming call request, and the user may answer the incoming call by using any device. After the incoming call is answered by using one of the devices, the other device stops outputting an incoming call notification. However, the multi-terminal with one number service has some restrictions. For example, the multi-terminal with one number service can be used only after being activated through the operator, and a device for which the multi-terminal with one number service is not activated cannot use the multi-terminal with one number service. For another example, a device that does not support the eSIM card cannot use the multi-terminal with one number service. For another example, the multi-terminal with one number service is not activated in a part of areas, and a device in such an area cannot use the multi-terminal with one number service. An application scenario is limited, and is not universal. For a wearable device that cannot use the multi-terminal with one number service, there is a lack of a technical solution that can avoid missing of an incoming call and that can save power.

Embodiments of this application provide a call method that may be applied to a wearable device that does not support a multi-terminal with one number service and an electronic device connected to the wearable device. Numbers of the wearable device and the electronic device are different. In this application, an incoming call for the wearable device may be forwarded to the electronic device. In this way, even if the wearable device disables a modem to reduce power consumption, the incoming call for the wearable device is not missed. A usage scenario is universal, and user experience is good.

Call forwarding in this application means forwarding an incoming call for a phone number 1 to a phone number 2, for example, forwarding the incoming call for the wearable device to the electronic device, and is specifically call forwarding for forwarding the incoming call for the phone number 1 of the wearable device to the phone number 2 of the electronic device. The incoming call for the phone number 1 is an incoming call whose called number is the phone number 1. After the incoming call for the phone number 1 is forwarded to the phone number 2, if another user dials the phone number 1, the wearable device having the phone number 1 does not receive an incoming call request, and the electronic device having the phone number 2 receives the incoming call request. In this application, the wearable device having the phone number 1 may be referred to as a call forwarding party, the phone number 1 is referred to as a call forwarding party number, the electronic device having the phone number 2 is referred to as a call forwarding target, and the phone number 2 is referred to as a call forwarding target number.

The following describes a call system 10 in embodiments of this application. The call system 10 may be but is not limited to a GSM, CDMA, WCDMA, TD-SCDMA, a universal mobile telecommunications system (universal mobile telecommunications system, UMTS), LTE, NR, or another future network system.

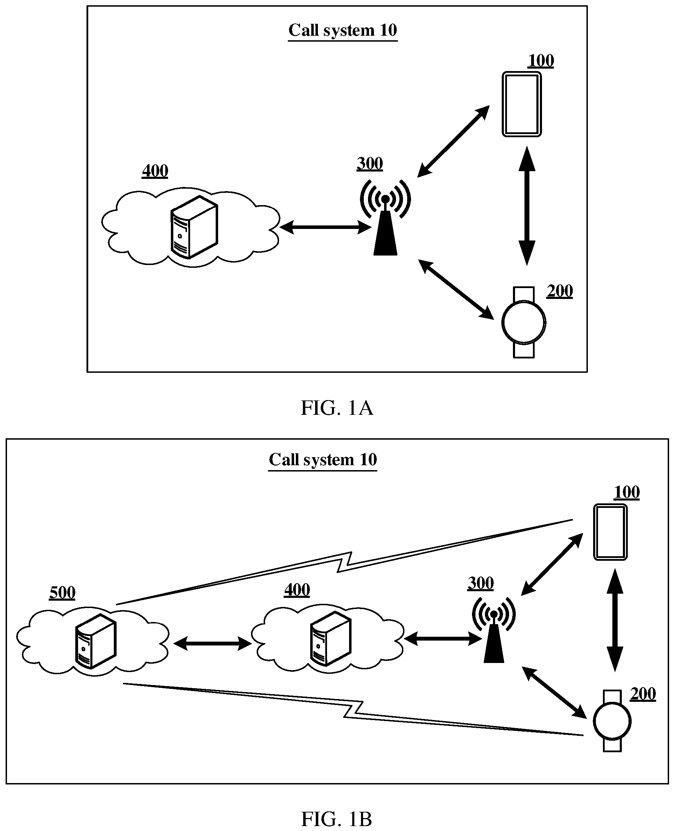

FIG. 1A is an example of a diagram of an architecture of a call system 10 according to an embodiment of this application.

As shown in FIG. 1A, the call system 10 may include an electronic device 100, an electronic device 200, a base station 300, and a core network 400. Details are as follows.

The electronic device 100 may be a device having a wireless communication function. In some embodiments, the electronic device 100 is a terminal. In some embodiments, the electronic device 100 is user equipment (user equipment, UE). In some embodiments, the electronic device 100 may also be referred to as a mobile station, an access terminal, a user agent, or the like. Descriptions of the electronic device 200 are similar to those of the electronic device 100. Details are not described again.

The base station 300 is a device deployed in a radio access network (radio access network, RAN) and configured to provide a wireless communication function. In different radio access systems, names of the base station may be different, for example, but not limited to a base transceiver station (base transceiver station, BTS) in a GSM or CDMA, a NodeB (NodeB, NB) in WCDMA, an evolved NodeB (evolved NodeB, eNodeB) in LTE, a next generation NodeB (gNodeB, gNB) in NR, or a base station in another future network system.

The core network 400 is a key control node in the call system 10, and is mainly responsible for a signaling processing function, for example, but not limited to implementing functions such as access control, mobility management, and session management. The core network 400 includes, for example, but is not limited to, an access and mobility management function (access and mobility management function, AMF) entity, a session management function (session management function, SMF) entity, a user plane function (user plane function, UPF) entity, and the like.

The electronic device 100 and the electronic device 200 may be connected to the base station 300 through air interfaces. The base station 300 may provide wireless communication services for the electronic device 100 and the electronic device 200, for example, an incoming call service and a data service. The core network 400 may be connected to at least one base station 300. The electronic device 100 and the electronic device 200 may communicate with the core network 400 via the base station 300.

For example, in the NR, the base station 300 may be referred to as the gNB, and the core network 400 may be referred to as a 5G core (5G Core, 5GC) network. A next generation radio access network (next generation radio access network, NG-RAN) node may consist of at least one gNB. The NG-RAN node may include at least one gNB connected to the 5GC through an NG interface, and the at least one gNB in the NG-RAN node may be connected to each other and communicate with each other through an Xn-C interface. The electronic device 100 or the electronic device 200 may be connected to and communicate with the gNB through a Uu interface.

The electronic device 100 and the electronic device 200 may be connected to each other and communicate with each other in a wireless manner. The wireless manner includes, for example, Bluetooth, Wi-Fi, a sidelink, a near field communication (near field communication, NFC) technology, ultra-wideband (ultra-wideband, UWB), and infrared.

In a possible implementation, the call system 10 further includes a server 500. For a specific example, refer to FIG. 1B. In some embodiments, the server 500 may include at least one server, and any server may be a hardware server or a cloud server. For example, the server 500 is a server cluster consisting of a plurality of servers.

In some embodiments, the electronic device 100 and the electronic device 200 may communicate with the server 500 through the Internet. The Internet may include a communication link such as a wired link or a wireless link, and network devices such as a base station, a router, and an access point (access point, AP). The wired link includes, for example, a high definition multimedia interface (high definition multimedia interface, HDMI), a universal serial bus (universal serial bus, USB), a coaxial cable, and an optical fiber.

In some embodiments, the server 500 may provide the electronic device 100 with a service for managing the electronic device 200, for example, but not limited to: viewing a location of the electronic device 200, configuring a parameter of the electronic device 200, and configuring a member that may manage the electronic device 200. For example, the electronic device 200 is a kids watch, the electronic device 100 is a smartphone used by a guardian, the server 500 is a management server of the kids watch, and the smartphone may become a manager of the kids watch by scanning a two-dimensional code on the kids watch. In some embodiments, the server 500 is an application server that provides a service for an application, and the application may be a Smart wearable application that is installed on the electronic device 100 and that is for managing the electronic device 200.

In some embodiments, the electronic device 100, the electronic device 200, and optionally, another device that may manage the electronic device 200 may send registration messages to the server 500, to register with the server. A registration message includes, for example, a communication address (for example, a Bluetooth address) and a communication number (for example, a phone number) that are of a device.

In some embodiments, the electronic device 100 may manage the electronic device 200 by using the server 500. For example, the electronic device 100 may send a management command to the server 500, and then the server 500 sends, to the electronic device 200, information indicating the management command, to manage the electronic device 200 according to the management command.

It should be noted that forms and quantities of the electronic device 100, the electronic device 200, the base station 300, the core network 400, and the server 500 shown in FIG. 1A and FIG. 1B are merely used as an example. This is not limited in embodiments of this application.

In some other embodiments, the base station 300 may alternatively be another access network device, for example, UE, an AP, a transmission reception point (transmission reception point, TRP), a relay device, or another network device having a function of the base station.

In some other embodiments, the electronic device 100 may alternatively be a device in another form, for example, but not limited to a mobile terminal such as a tablet computer, a handheld computer, or a personal digital assistant (Personal Digital Assistant, PDA), a smart home device such as a smart television, or another device such as a desktop, a laptop, a notebook computer, an ultra-mobile personal computer (Ultra-mobile Personal Computer, UMPC), a netbook, a smart screen, or a learning machine.

In some other embodiments, the electronic device 200 may alternatively be a device in another form, for example, but not limited to a wearable device such as a smart band, smart glasses, an augmented reality (augmented reality, AR) device, a virtual reality (virtual reality, VR) device, or a mixed reality (mixed reality, MR) device.

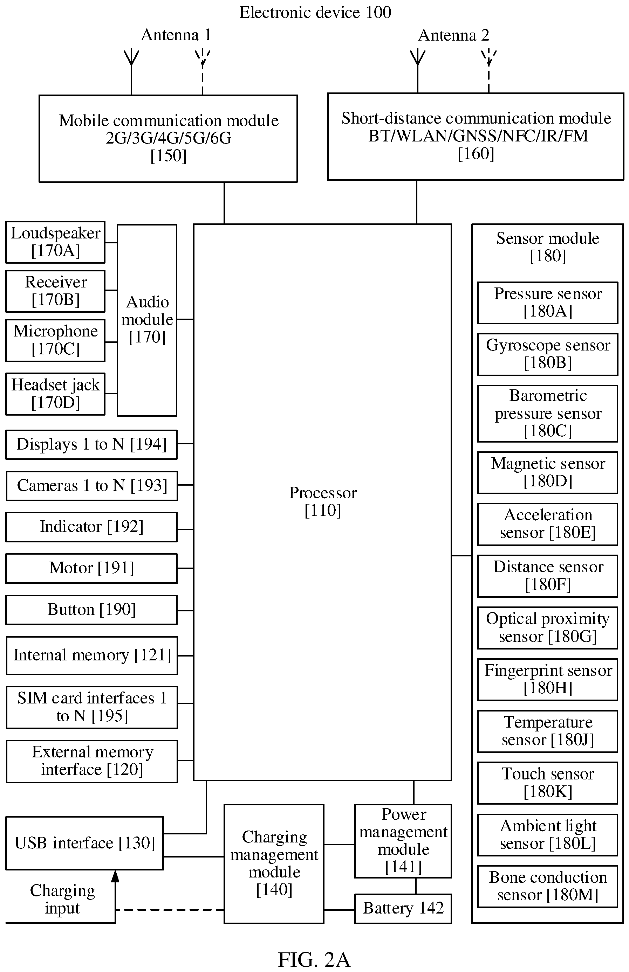

FIG. 2A is an example of a diagram of a hardware structure of an electronic device 100.

The following specifically describes embodiments by using the electronic device 100 as an example. It should be understood that the electronic device 100 shown in FIG. 2A is merely an example, and the electronic device 100 may have more or fewer components than those shown in FIG. 2A, two or more components may be combined, or different component configurations may be used. Various components shown in the FIG. 2A may be implemented by using hardware that includes one or more signal processing and/or application-specific integrated circuits, software, or a combination of hardware and software.

As shown in FIG. 2A, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a short-distance communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, some components are combined, some components are split, or different component arrangements are used. The components shown in the figure may be implemented by hardware, software, or a combination of the software and the hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that the processor 110 has just used or cyclically uses. If the processor 110 needs to use the instructions or the data again, the processor 110 may directly call the instructions or the data from the memory. This avoids repeated access, reduces waiting time of the processor 110, and therefore improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The MIPI may be configured to connect the processor 110 to a peripheral component such as the display 194 or the camera 193. The MIPI includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

The USB interface 130 is an interface that conforms to a USB standard specification, and may be specifically a mini USB interface, a micro USB interface, a USB type-C interface, or the like. The USB interface 130 may be configured to connect to the charger to charge the electronic device 100, may be configured to perform data transmission between the electronic device 100 and a peripheral device, or may be configured to connect to a headset for playing audio through the headset. The interface may be further configured to connect to another electronic device, for example, a wearable device such as an AR device.

It may be understood that an interface connection relationship between the modules that is shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive charging input from the charger. The charging management module 140 may further supply power to the electronic device through the power management module 141 while charging the battery 142.

The power management module 141 is configured to connect to the battery 142, the charging management module 140, and the processor 110. The power management module 141 receives input from the battery 142 and/or the charging management module 140, and supplies power to the processor 110, the internal memory 121, the display 194, the camera 193, the short-distance communication module 160, and the like.

The wireless communication function of the electronic device 100 may be implemented by using the antenna 1, the antenna 2, the mobile communication module 150, the short-distance communication module 160, the modem processor (modem), the baseband processor, and the like. In some embodiments, the mobile communication module 150 and the modem may be for communication between the electronic device 100 and a base station 300. In some embodiments, the short-distance communication module may be for communication between the electronic device 100 and an electronic device 200.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution that is applied to the electronic device 100 and that includes wireless communication such as 2G/3G/4G/5G/6G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert an amplified signal into an electromagnetic wave through the antenna 1 for radiation. In some embodiments, at least a part of function modules in the mobile communication module 150 may be disposed in the processor 110. In some embodiments, at least a part of function modules in the mobile communication module 150 may be disposed in a same component as at least a part of modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transferred to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same component as the mobile communication module 150 or another function module.

The short-distance communication module 160 may provide a solution, applied to the electronic device 100, to wireless communication including a wireless local area network (wireless local area network, WLAN) (for example, a Wi-Fi network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The short-distance communication module 160 may be one or more components integrating at least one communication processor module. The short-distance communication module 160 receives an electromagnetic wave through the antenna 2, performs frequency modulation and filtering processing on an electromagnetic wave signal, and sends a processed signal to the processor 110. The short-distance communication module 160 may receive a to-be-sent signal from the processor 110, perform frequency modulation and amplification on the signal, and convert a signal that undergoes the frequency modulation and amplification into an electromagnetic wave through the antenna 2 for radiation.

In some embodiments, the antenna 1 and the mobile communication module 150 in the electronic device 100 are coupled, and the antenna 2 and the short-distance communication module 160 in the electronic device 100 are coupled, so that the electronic device 100 may communicate with a network and another device by using a wireless communication technology. The wireless communication technology may include a GSM, a general packet radio service (general packet radio service, GPRS), CDMA, WCDMA, TD-SCDMA, LTE, the BT, the GNSS, the WLAN, the NFC, the FM, the IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation systems, SBAS).

The electronic device 100 implements the display function, for example, displays an incoming call notification, by using the GPU, the display 194, the application processor, and the like. The GPU is a microprocessor for image processing, and is connected to the display 194 and the application processor. The GPU is configured to perform mathematical and geometric computation, and render graphics. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light emitting diode (flexible light emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193.

The camera 193 is configured to capture a static image or a video. In some embodiments, the electronic device 100 may include one or N cameras 193, where N is a positive integer greater than 1.

The external memory interface 120 may be configured to connect to an external memory card.

The internal memory 121 may be configured to store computer-executable program code. The executable program code includes instructions. The internal memory 121 may include a program storage area and a data storage area. The program storage area may store an operating system, an application needed by at least one function (for example, a sound playing function or an image play function), and the like. The data storage area may store data (for example, audio data and an address book) created during use of the electronic device 100, and the like. In addition, the internal memory 121 may include a high-speed random access memory, or may include a nonvolatile memory, for example, at least one magnetic disk storage component, a flash memory component, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing recording, and outputting the incoming call notification, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or a part of function modules in the audio module 170 are disposed in the processor 110.

The speaker 170A, also referred to as a "loudspeaker", is configured to convert an audio electrical signal into a sound signal. The electronic device 100 may be for listening to music or answer a handsfree calling over the speaker 170A.

The receiver 170B, also referred to as an "earpiece", is configured to convert an audio electrical signal into a sound signal. When the electronic device 100 is for answering a call or receiving speech information, the receiver 170B may be put close to a human ear to listen to a voice.

The microphone 170C, also referred to as "mike" or "mic", is configured to convert a sound signal into an electrical signal. When dialing or sending speech information, a user may make a sound near the microphone 170C through a human mouth, to input the sound signal to the microphone 170C. At least one microphone 170C may be disposed in the electronic device 100.

The headset jack 170D is configured to connect to a wired headset.

The pressure sensor 180A is configured to sense a pressure signal, and may convert the pressure signal into an electrical signal. In some embodiments, the pressure sensor 180A may be disposed on the display 194. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions.

The gyroscope sensor 180B may be configured to determine a moving posture of the electronic device 100. The gyroscope sensor 180B may be configured to implement image stabilization during photographing. The gyroscope sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a hall effect sensor. The electronic device 100 may detect opening and closing of a flip cover by using the magnetic sensor 180D.

The acceleration sensor 180E may detect magnitudes of accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light emitting diode (LED) and an optical detector, for example, a photodiode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based incoming call answering, and the like.

The temperature sensor 180J is configured to detect a temperature. In some embodiments, the electronic device 100 executes a temperature processing policy through the temperature detected by the temperature sensor 180J.

The touch sensor 180K is also referred to as a "touch component". The touch sensor 180K may be disposed on the display 194, and a touchscreen consists of the touch sensor 180K and the display 194. The touch sensor 180K is configured to detect a touch operation performed on or near the touch sensor 180K. The touch sensor may transfer the detected touch operation to the application processor to determine a type of a touch event. A visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset.

The button 190 includes a power button, a volume button, and the like.

The motor 191 may generate a vibration prompt.

The indicator 192 may be an indicator light, and may be configured to indicate a charging status and a power change, or may be configured to indicate a message, a missed incoming call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, a software SIM card, and the like. A plurality of cards may be inserted into a same SIM card interface 195 simultaneously. The plurality of cards may be of a same type or different types. The SIM card interface 195 is also compatible with different types of SIM cards. The SIM card interface 195 is also compatible with an external storage card. The electronic device 100 interacts with the network by using the SIM card, to implement functions such as a call and data communication, for example, performing communication based on a 2G, 3G, 4G, 5G, or 6G network. In some embodiments, the electronic device 100 uses an eSIM. The eSIM card may be embedded in the electronic device 100, and cannot be separated from the electronic device 100.

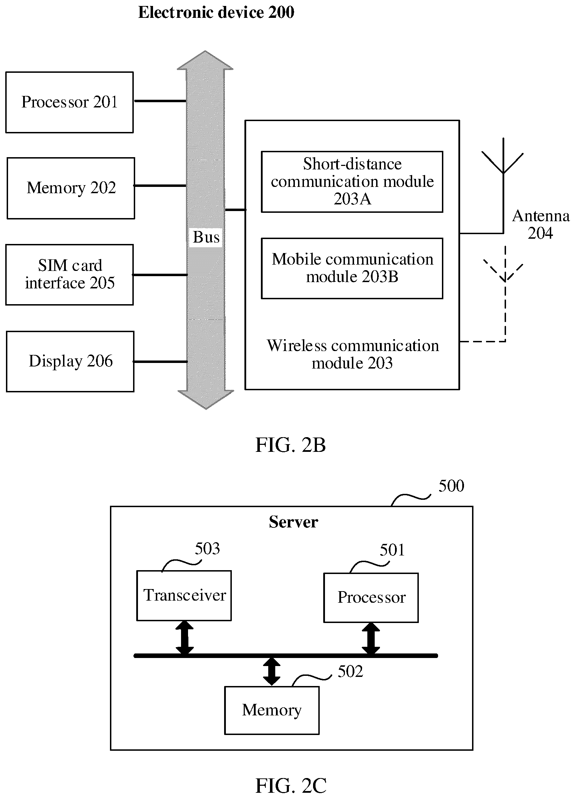

FIG. 2B is an example of a diagram of a hardware structure of an electronic device 200.

The following specifically describes embodiments by using the electronic device 200 as an example. It should be understood that the electronic device 200 shown in FIG. 2B is merely an example, and the electronic device 200 may have more or fewer components than those shown in FIG. 2B, two or more components may be combined, or different component configurations may be used.

As shown in FIG. 2B, the electronic device 200 may include a processor 201, a memory 202, a wireless communication module 203, an antenna 204, a SIM card interface 205, and a display 206. In some embodiments, the electronic device 200 may further include a wired communication module (not shown). Details are as follows.

The processor 201 may be configured to read and perform computer-readable instructions. In some embodiments, the processor 201 may mainly include a controller, an arithmetic unit, and a register. The controller is mainly responsible for decoding instructions and sending a control signal for an operation corresponding to the instructions. The arithmetic unit is mainly responsible for saving a quantity of register operations, intermediate operation results, and the like that are temporarily stored during instruction execution. In some embodiments, a hardware architecture of the processor 201 may be an application-specific integrated circuit (ASIC) architecture, an MIPS architecture, an ARM architecture, a network processor (NP) architecture, or the like. In some embodiments, the processor 201 may be further configured to generate a signal sent by the wireless communication module 203, for example, a Bluetooth broadcast signal or a beacon signal. In some embodiments, the processor 201 may include a modem processor (modem).

The memory 202 is coupled to the processor 201, and is configured to store various software programs and/or a plurality of groups of instructions. During specific implementation, the memory 202 may include a high-speed random access memory, and may also include a nonvolatile memory such as one or more diskette storage devices, a flash device, or another nonvolatile solid-state storage device. The memory 202 may store an operating system, for example, an embedded operating system such as uCOS, VxWorks, or RTLinux. The memory 202 may further store a communication program. The communication program may be for communicating with an electronic device 100, a base station 300, a server 500, or another device.

The wireless communication module 203 may include a short-distance communication module 203A and a mobile communication module 203B. In some embodiments, the short-distance communication module 203A may provide a short-distance communication function of the electronic device 200, for example, but not limited to including one or more of a WLAN, Bluetooth, a sidelink, NFC, UWB, infrared, and the like. Optionally, the electronic device 200 may communicate with the electronic device 100 by using the short-distance communication module 203A. In some embodiments, the mobile communication module 203B may provide a mobile communication function of the electronic device 200, for example, but not limited to including one or more of GSM, CDMA, WCDMA, TD-SCDMA, UMTS, LTE, and NR. Optionally, the electronic device 200 may communicate with the base station 300 by using the mobile communication module 203B.

In some embodiments, the short-distance communication module 203A may detect, through monitoring, a signal transmitted by another device, for example, a measurement signal or a scanning signal, and may send a response signal, for example, a measurement response or a scanning response, so that the another device (for example, the electronic device 100) may discover the electronic device 200, and set up a wireless communication connection to the another device through one or more of the WLAN and Bluetooth or another near field communication technology, to perform data transmission.

In some other embodiments, the short-distance communication module 203A may transmit a signal, for example, broadcast a probe signal or the beacon signal, so that a router may discover the electronic device 200, and set up a wireless communication connection to the router through the WLAN, to connect to another device, for example, the electronic device 100 or the server 500.

In some embodiments, the mobile communication module 203B may perform cellular communication and/or data communication. For example, the mobile communication module 203B may include a circuit switched (circuit switched, CS) module configured to perform cellular communication and a packet switching (packet switching, PS) module configured to perform data communication. The mobile communication module 203B may include a baseband chip and a radio frequency chip (which may also be referred to as a radio frequency module). The radio frequency chip may be for radio frequency transceiving, frequency synthesis, and power amplification. The baseband chip may be for signal processing and protocol processing. The baseband chip may include a CPU, a channel encoder, a digital signal processor, a modem, and an interface module. The electronic device 200 may receive an electromagnetic wave by using the radio frequency module, perform processing such as filtering and amplification on the received electromagnetic wave, and then transmit a processed electromagnetic wave to the modem for demodulation. To implement low power consumption, the radio frequency module (also referred to as a radio frequency module of the modem) in the mobile communication module 203B may be in a disabled state, that is, does not supply power to the radio frequency module. When the radio frequency module of the modem is in the disabled state, the electronic device 200 cannot independently implement calling with another electronic device.

In this application, when a cellular communication function is disabled, the electronic device 200 cannot perform cellular communication. An implementation may include but is not limited to not supplying power to the radio frequency module, not supplying power to the modem, enabling the modem to sleep, or the like. When the electronic device 200 disables the cellular communication function, the electronic device 200 cannot communicate with the base station 300 and a core network 400, and cannot obtain a network service such as a voice service or a data service. It may be understood that, when disabling the cellular communication function, the electronic device 200 may further communicate with the another electronic device (for example, the electronic device 100) by using one or more wireless communication technologies in the WLAN, Bluetooth, the sidelink, the NFC, the UWB, the infrared, and the like.

The wired communication module (not shown) may be configured to set up a connection to a device such as the router through a network cable, and connect to another device such as the server 500 via the router.

The antenna 204 may be configured to transmit and receive electromagnetic wave signals. Antennas of different communication modules may be multiplexed, or may be independent of each other, to improve antenna utilization.

The SIM card interface 205 is configured to connect to a SIM card. The SIM card may be inserted into the SIM card interface 205 or removed from the SIM card interface 205, to implement contact with or separation from the electronic device 200. The electronic device 200 may support one or N SIM card interfaces, where N is a positive integer greater than 1. The SIM card interface 205 may support a nano-SIM card, a micro-SIM card, a SIM card, a software SIM card, and the like. A plurality of cards may be inserted into a same SIM card interface 205 simultaneously. The plurality of cards may be of a same type or different types. The SIM card interface 205 is also compatible with different types of SIM cards. The electronic device 200 interacts with a network by using the SIM card, to implement functions such as a call and data communication, for example, performing communication based on a 2G, 3G, 4G, 5G, or 6G network. In some embodiments, the electronic device 200 uses an eSIM. The eSIM card may be embedded in the electronic device 200, and cannot be separated from the electronic device 200.

The display 206 may be configured to display an image, a video, and the like, for example, display an incoming call notification. The display 206 includes a display panel. The display panel may be a liquid crystal display, an organic light-emitting diode, an active-matrix organic light emitting diode, a flexible light emitting diode, a quantum dot light emitting diode, or the like. In some embodiments, the electronic device 200 may include one or N displays 206, where N is a positive integer greater than 1.

FIG. 2C is an example of a diagram of a hardware structure of a server 500.

As shown in FIG. 2C, the server 500 may include a processor 501, a memory 502, and a transceiver 503. The processor 501, the memory 502, and the transceiver 503 may be connected to each other through a bus.

The processor 501 may be one or more central processing units (central processing units, CPUs). When the processor 501 is one CPU, the CPU may be a single-core CPU or a multi-core CPU. The memory 502 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 502 is configured to store a related computer program and data.

The transceiver 503 is configured to receive and send data. The server 500 may communicate with another device (for example, an electronic device 100, an electronic device 200, or a core network 400) by using a wireless communication technology through the transceiver 503.

Structures of a base station 300 and the core network 400 are similar to the structures shown in FIG. 2C. Details are not described again.

A software system of the electronic device 100 may use a layered architecture, an event-driven architecture, a microkernel architecture, a micro service architecture, or a cloud architecture. For example, a software system of the layered architecture may be an Android (Android) system, or may be a Huawei mobile services (Huawei mobile services, HMS) system or another software system. In embodiments of this application, the Android system of the layered architecture is used as an example to describe the software structure of the electronic device 100.

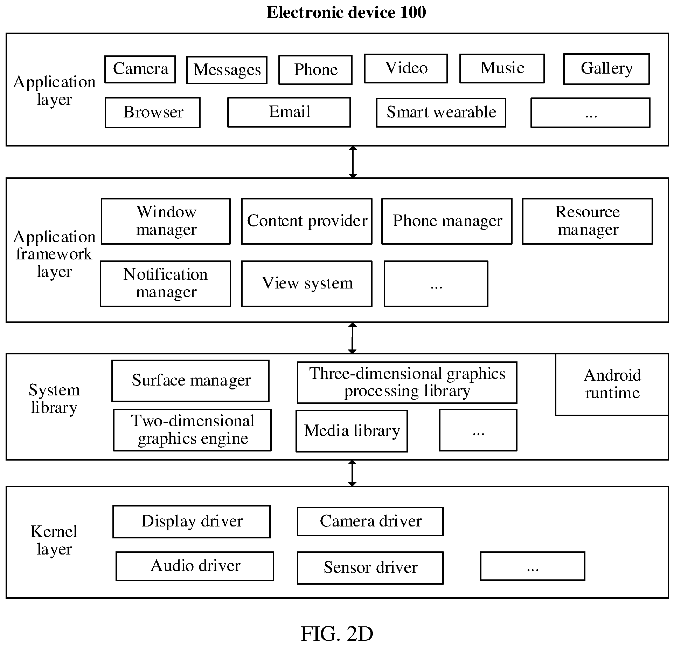

FIG. 2D is an example of a diagram of a software structure of an electronic device 100.

In the layered architecture, software is divided into several layers, and each layer has a clear role and task. The layers communicate with each other through a software interface. In some embodiments, an Android system is divided into four layers: an application layer, an application framework layer, Android runtime (Android runtime) and a system library, and a kernel layer from top to bottom.

The application layer may include a series of application packages.

As shown in FIG. 2D, the application packages may include applications such as Camera, Messages, Phone, Video, Music, Gallery, Browser, Email, and Smart wearable.

The application framework layer provides an application programming interface (application programming interface, API) and a programming framework for an application at the application layer. The application framework layer includes some predefined functions.

As shown in FIG. 2D, the application framework layer may include a window manager, a content provider, a view system, a phone manager, a resource manager, a notification manager, and the like.

The window manager is configured to manage a window program.

The content provider is configured to: store and obtain data, and enable the data to be accessed by an application.

The view system includes visual controls such as a text display control and an image display control. The view system may be configured to construct the application. A display interface may consist of one or more views.

The phone manager is configured to provide a communication function of the electronic device 100, for example, management of a call status (including answering, hanging up, or the like).

The resource manager provides various resources such as a localized character string, an icon, an image, a layout file, and a video file for the application.

The notification manager enables the application to display notification information in a status bar, and may be configured to convey a notification-type message. The notification information may automatically disappear after a short pause without a user interaction. The notification manager may alternatively be a notification that appears in a top status bar of the system in a form of a scroll bar text, for example, a notification of an application that is run in a background, or may be a notification that appears on a screen in a form of a dialog window. For example, text information is displayed in the status bar, an announcement is given, the electronic device vibrates, or an indicator light blinks.

The Android runtime includes a kernel library and a virtual machine. The Android runtime is responsible for scheduling and management of the Android system.

The kernel library includes two parts: a function that needs to be called in java language and a kernel library of Android.

The application layer and the application framework layer are run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (Media Library), a three-dimensional graphics processing library (for example, OpenGL ES), and a 2D graphics engine (for example, SGL).

The surface manager is configured to manage a display subsystem, and provide fusion of 2D and 3D layers for a plurality of applications.

The media library supports playback and recording in a plurality of commonly used audio and video formats, and static image files. The media library may support a plurality of audio video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working procedure of the software and the hardware of the electronic device 100 with reference to a scenario of answering an incoming call.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a touch tap operation, and a control corresponding to the tap operation is a control for answering the incoming call. A Phone application invokes an interface of an application framework layer, for example, a phone manager, thereby invoking the kernel layer to start a display audio driver, answer the incoming call, and perform phone communication with an incoming call object.

User interface embodiments in embodiments of this application are described below.

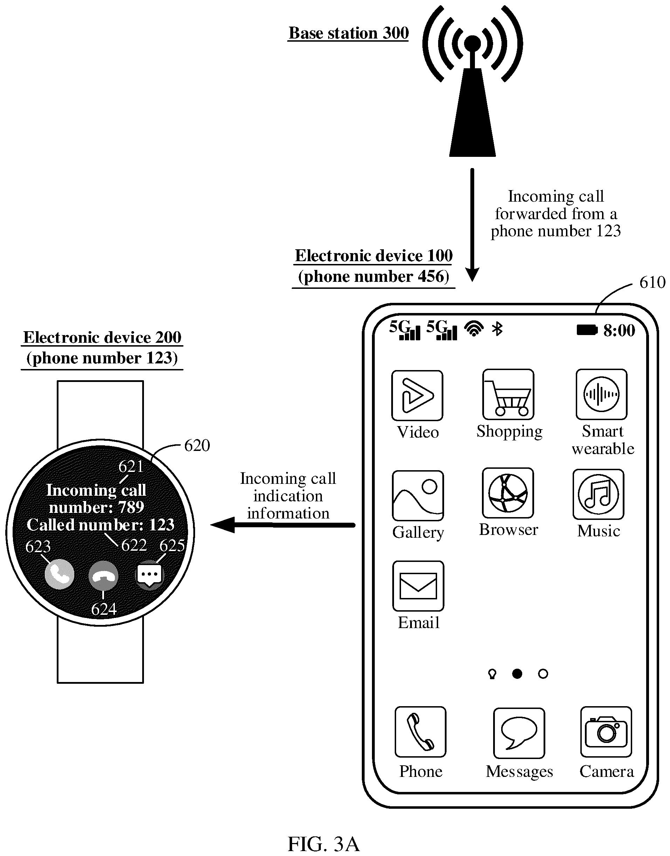

FIG. 3A is an example of a diagram of a user interface in an incoming call scenario. In the incoming call scenario shown in FIG. 3A, phone numbers of an electronic device 100 and an electronic device 200 are different. In FIG. 3A, an example in which the phone number of the electronic device 200 is 123 and the phone number of the electronic device 100 is 456 is used for description.

As shown in FIG. 3A, after a call forwarding configuration (forwarding an incoming call for the phone number 123 to the phone number 456) is completed, the electronic device 200 may disable a cellular communication function, for example, disable a modem. In this case, the electronic device 200 may maintain a Bluetooth connection to the electronic device 100. In this case, a core network 400 receives an incoming call whose called number is 123 (namely, an incoming call forwarded from the phone number 123), and may send the incoming call to a call forwarding target (namely, the electronic device 100) via the base station 300 based on the foregoing completed call forwarding configuration.

As shown in FIG. 3A, the electronic device 100 may display a user interface 610. In some embodiments, the user interface 610 is a home screen, and the user interface 610 may include at least one application icon, for example, but not limited to an icon of Video, an icon of Shopping, an icon of Smart wearable, an icon of Gallery, an icon of Browser, an icon of Music, an icon of Email, an icon of Phone, an icon of Messages, and an icon of Camera. After the electronic device 100 receives the incoming call sent by the base station 300, if the electronic device 100 determines that the incoming call is the incoming call forwarded from the phone number 123, the electronic device 100 may send incoming call indication information to the electronic device 200 through the Bluetooth connection to the electronic device 200 based on the foregoing completed call forwarding configuration. The incoming call indication information may include a calling number (which may also be referred to as an incoming call number) (assumed to be 789) and an actual called number (namely, the phone number 123 of the electronic device 200). In this case, the electronic device 100 may not output an incoming call notification, and keep displaying the user interface 610.

As shown in FIG. 3A, after receiving the incoming call indication information sent by the electronic device 100, the electronic device 200 may output an incoming call notification based on the incoming call indication information, that is, display a user interface 620. The user interface 620 may include prompt information 621, prompt information 622, an answer control 623, a hang-up control 624, and a message control 625. The prompt information 621 includes characters "Incoming call number: 789", and indicates that a calling number of a current incoming call is 789. The prompt information 622 includes characters "Called number: 123", and indicates that a called number of the current incoming call is the phone number 123 of the electronic device 200. The answer control 623 may be for answering the current incoming call. The hang-up control 624 may be for hanging up/rejecting the current incoming call. The message control 625 may be for enabling a function for sending a message to the calling number of the current incoming call. For example, the electronic device 200 displays a user interface of a Messages application in response to a touch operation performed on the message control 625. A number of a receiver of the message on the user interface is the calling number 789.

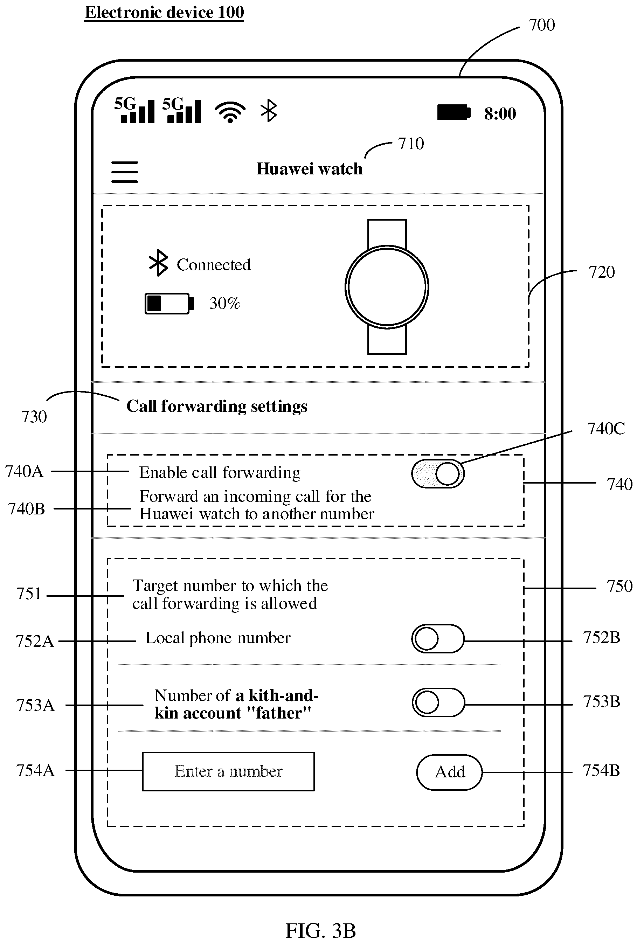

In some embodiments, a user may set a phone number that is allowed to be used as a call forwarding target number. For a specific example, FIG. 3B is an example of a diagram of a settings screen.

As shown in FIG. 3B, a user may set, by using an electronic device 100, a phone number that is allowed to be used as a call forwarding target number, where call forwarding is forwarding an incoming call for an electronic device 200 to a call forwarding target (having the target number). The electronic device 100 may display a user interface 700 of a Smart wearable application. The user interface 700 may include a title 710, device information 720, and an introduction 730. Details are as follows.

The title 710 and the device information 720 may be for representing information about a currently managed wearable device (namely, the electronic device 200). The title 710 may include a name of the electronic device 200: "Huawei watch". The device information 720 may include a Bluetooth identifier and characters "Connected", and indicate that the electronic device 100 and the electronic device 200 are currently connected to each other through Bluetooth. The device information 720 may further include a power identifier and characters "30%", and indicate that remaining power of the currently connected electronic device 200 is 30% of total power.

The introduction 730 may include characters "Call forwarding settings", and represent that the user interface 700 may be for setting a call forwarding configuration of the currently managed wearable device (namely, the electronic device 200). There is setting information 740 under the introduction 730. The setting information 740 may include a setting name 740A, setting descriptions 740B, and a setting switch 740C. The setting name 740A may include characters "Enable call forwarding". The setting descriptions 740B may include characters "Forward an incoming call for the Huawei watch to another number", and may represent that the setting information 740 is for setting whether to enable a call forwarding function. The setting switch 740C may be for enabling or disabling the call forwarding function. That the setting switch 740C on the user interface 700 is in an on state represents that the call forwarding function of the electronic device 200 has been enabled.

After the call forwarding function of the electronic device 200 is enabled, the electronic device 100 may display setting information 750 on the user interface 700. The setting information 750 may include a setting name 751. The setting name 751 includes characters "Target number to which the call forwarding is allowed", and may represent that the setting information 750 is for setting the phone number that is allowed to be used as the call forwarding target number. The setting information 750 may further include a setting name 752A and a setting switch 752B. The setting name 752 includes characters "Local phone number". The setting switch 752B may be for setting a number of the electronic device 100 to be allowed to be used as the call forwarding target number or canceling the setting. The setting information 750 may further include a setting name 753A and a setting switch 753B. The setting name 753A includes characters "Number of a kith-and-kin account 'father'". The setting switch 753B may be for setting the number of the kith-and-kin account "father" to be allowed to be used as the call forwarding target number or cancel the setting. The setting information 750 may further include a text entry box 754A and an add control 754B. The text entry box 754A may include characters "Enter a number". The text entry box 754A may be used by the user to enter a phone number. The add control 754B may set the number entered by the user in the text entry box 754A to be allowed to be used as the call forwarding target number. This may be understood as that the user customizes the phone number that is allowed to be used as the call forwarding target number.

The user interface 700 shows only related content of setting the number of the kith-and-kin account "father" to the phone number that is allowed to be used as the call forwarding target number. In specific implementation, setting content of more or fewer kith-and-kin accounts or setting content of a phone number obtained in another manner, for example, setting content of a phone number obtained from an address book, may be displayed. This is not limited in this application.

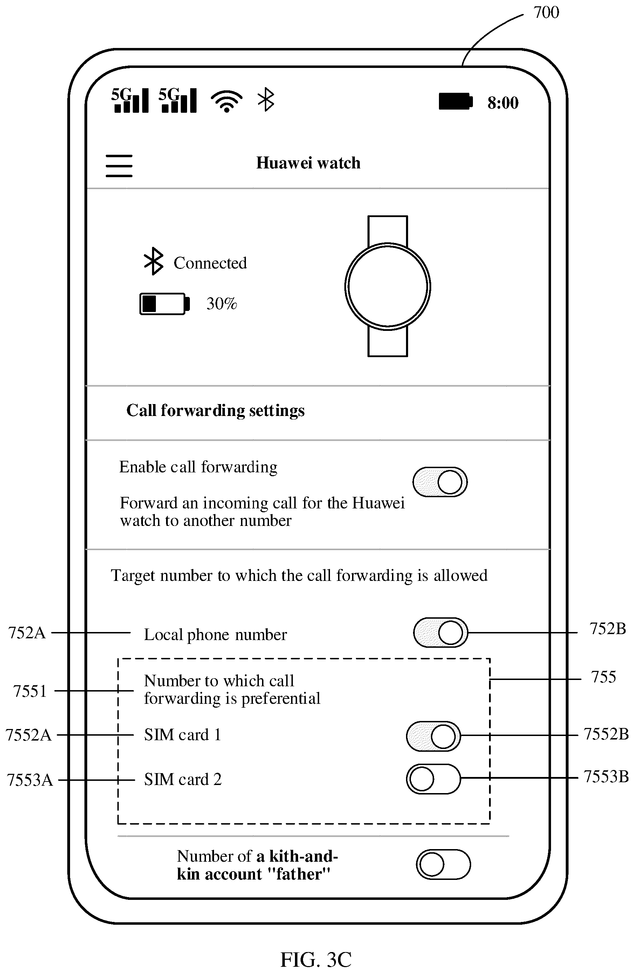

In some embodiments, the electronic device 100 may be configured with a plurality of SIM cards, namely, a plurality of phone numbers. The user may not only set a number of the electronic device 100 to be allowed to be used as a call forwarding target number, but also set priorities of the plurality of numbers. When any two numbers are normally used (for example, when a wireless communication service provided by a base station is normal), a number having a higher priority is used as the call forwarding target number. For a specific example, refer to FIG. 3C.

FIG. 3C is an example of a diagram of another settings screen. In FIG. 3C, an example in which the electronic device 100 includes two SIM cards (namely, two numbers) is used for description.

As shown in FIG. 3C, a user may set, by using the electronic device 100, a phone number that is allowed to be used as a call forwarding target number, where call forwarding is forwarding an incoming call for an electronic device 200 to a call forwarding target (having the target number). The electronic device 100 may display a user interface 700 of a Smart wearable application. The user interface 700 shown in FIG. 3C is similar to the user interface 700 shown in FIG. 3B. A difference lies in that a setting switch 752B on the user interface 700 shown in FIG. 3C is in an on state. That is, this represents that a phone number of the electronic device 100 is set to be allowed to be used as the call forwarding target number. In this case, the electronic device 100 may display setting information 755 on the user interface 700. Details are as follows.

The setting information 755 may include a setting name 7551. The setting name 7551 includes characters "Number to which call forwarding is preferential", and may represent that the setting information 755 is for setting a number that is in the two phone numbers of the electronic device 100 and that is preferentially used as the call forwarding target number. The setting information 755 may further include a name 7552A and a corresponding switch 7552B, and a name 7553A and a corresponding switch 7553B. The name 7552A includes characters "SIM card 1". The switch 7552B corresponding to the name 7552A may be for setting a number of the SIM card 1 of the electronic device 100 to be preferentially used as the call forwarding target number or canceling the setting. The name 7553A includes characters "SIM card 2". The switch 7553B corresponding to the name 7553A may be for setting a number of the SIM card 2 of the electronic device 100 to be preferentially used as the call forwarding target number or canceling the setting. That the switch 7552B on the user interface 700 shown in FIG. 3C is in the on state may represent that the number of the SIM card 1 of the electronic device 100 is set to be preferentially used as the call forwarding target number, or may be understood as that a priority of the number of the SIM card 1 is set to be higher than a priority of the number of the SIM card 2. In this case, if the number of the electronic device 100 needs to be configured as the call forwarding target number, and both the SIM card 1 and the SIM card 2 may be for a normal call, the electronic device 100 configures the number of the SIM card 1 as the call forwarding target number.

It may be understood that the switch 7552B and the switch 7553B cannot keep in the on state simultaneously. For example, on the user interface 700 shown in FIG. 3C, the switch 7552B is in the on state, and the switch 7553B is in an off state. The electronic device 100 switches the switch 7553B from the off state to the on state in response to a touch operation performed on the switch 7553B, and switches the switch 7552B from the on state to the off state simultaneously.

In some embodiments, after a call forwarding configuration (forwarding an incoming call for an electronic device 200 to an electronic device 100) is completed, the electronic device 200 may maintain a Bluetooth connection to the electronic device 100. In this case, if the electronic device 100 or the electronic device 200 receives a user operation for disabling Bluetooth, the electronic device 100 or the electronic device 200 may output prompt information, to prompt a user with a case in which disabling Bluetooth will cancel the call forwarding configuration, thereby avoiding a case in which the call forwarding configuration is invalid due to a misoperation of the user, and improving user experience. For a specific example, refer to FIG. 3D-1 and FIG. 3D-2.

FIG. 3D-1 and FIG. 3D-2 are an example of a diagram of a user interface embodiment. In FIG. 3D-1 and FIG. 3D-2, an example in which an electronic device 100 receives a user operation for disabling Bluetooth is used for description. An interface example in which an electronic device 200 receives the user operation for disabling Bluetooth is similar. Details are not described again.

As shown in FIG. 3D-1 and FIG. 3D-2, after a call forwarding configuration (forwarding an incoming call for the electronic device 200 to the electronic device 100) is completed, the electronic device 200 may disable a cellular communication function. In this case, the electronic device 200 may maintain a Bluetooth connection to the electronic device 100. The electronic device 100 may display a user interface 810. In some embodiments, the electronic device 100 may display, when displaying the user interface 610 shown in FIG. 3A, the user interface 810 in response to a user operation of sliding downward from the top. The user interface 810 may include a setting bar 811 and a notification bar. The setting bar 811 may include one or more on/off options of one or more functions, for example, but not limited to a WLAN on/off option, a Bluetooth on/off option 811A, a Mobile data on/off option, a Silent on/off option, and an Auto-rotate on/off option. The WLAN on/off option, the Bluetooth on/off option 811A, and the Mobile data on/off option are in an on state, and the Silent on/off option and the Auto-rotate on/off option are in an off state. The Bluetooth on/off option 811A may be for enabling or disabling a Bluetooth function. The electronic device 100 may receive a touch operation (for example, a tap operation) performed on the Bluetooth on/off option 811A, and display prompt information, for example, display a user interface 820, in response to the touch operation.

As shown in FIG. 3D-1 and FIG. 3D-2, the electronic device 100 may display the user interface 820. The user interface 820 may include prompt information 821. The prompt information 821 may include a prompt message 821A, an OK control 821B, and a cancel control 821C. The prompt message 821A includes characters "There is a call forwarding configuration currently, and disabling Bluetooth will cancel the configuration. Are you sure to disable Bluetooth?". The OK control 821B may be for disabling Bluetooth. The cancel control 821C may be for keeping Bluetooth enabled. In some embodiments, the electronic device 100 may disable Bluetooth in response to a touch operation performed on the OK control 821B. In this case, the Bluetooth connection between the electronic device 100 and the electronic device 200 is broken. In this case, even if the electronic device 100 receives the incoming call forwarded from a number of the electronic device 200, the electronic device 100 cannot send incoming call indication information to the electronic device 200. This may be understood as that the call forwarding configuration on the electronic device 100 side is canceled. Optionally, when detecting that the Bluetooth connection to the electronic device 100 is broken, the electronic device 200 may enable the cellular communication function, to avoid missing of the incoming call for the electronic device 200. In some other embodiments, the electronic device 100 may cancel, in response to a touch operation performed on the cancel control 821C, displaying the prompt information 821, for example, display the user interface 810. In this case, the Bluetooth connection between the electronic device 100 and the electronic device 200 remains normal, and the call forwarding configuration still takes effect.

In some embodiments, after a call forwarding configuration (forwarding an incoming call for an electronic device 200 to an electronic device 100) is completed, the electronic device 200 may maintain a Bluetooth connection to the electronic device 100. In this case, if a Bluetooth connection is set up between the electronic device 200 and another device (assumed to be an electronic device 600), a user may choose whether to update the call forwarding configuration. For a specific example, FIG. 3E is an example of a diagram of another user interface embodiment.

As shown in FIG. 3E, after a call forwarding configuration (forwarding an incoming call for an electronic device 200 to an electronic device 100) is completed, the electronic device 200 may disable a cellular communication function. In this case, the electronic device 200 may maintain a Bluetooth connection to the electronic device 100. The electronic device 200 may display a user interface 910, and the user interface 910 may include time and a date. In this case, if a Bluetooth connection is set up between the electronic device 200 and an electronic device 600, for example, the electronic device 200 receives a user operation for triggering setup of the Bluetooth connection to the electronic device 600, the electronic device 200 may display prompt information, for example, display a user interface 920.

As shown in FIG. 3E, the electronic device 200 may display the user interface 920. The user interface 920 may include a prompt message 921, an OK control 922, and a cancel control 923. The prompt message 921 may include characters "Are you sure to update a call forwarding configuration to the electronic device 600?". The OK control 922 may be for triggering the update of the call forwarding configuration to the electronic device 600. The cancel control 923 may be for maintaining the current call forwarding configuration.

In some embodiments, the electronic device 200 may cancel the current call forwarding configuration (forwarding the incoming call for the electronic device 200 to the electronic device 100) in response to a touch operation performed on the OK control 922, and complete a new call forwarding configuration (forwarding the incoming call for the electronic device 200 to the electronic device 600). In this case, a core network 400 receives an incoming call whose called number is a number of the electronic device 200, and may send the incoming call (that is, the incoming call forwarded from the phone number of the electronic device 200) to a new call forwarding target (namely, the electronic device 600) via a base station 300, instead of sending the incoming call to the electronic device 100. When the electronic device 600 determines that the received incoming call is the incoming call forwarded from the phone number of the electronic device 200, the electronic device 600 may send incoming call indication information to the electronic device 200, and the electronic device 200 outputs an incoming call notification. A specific example is similar to that in FIG. 3A. A difference lies in that the electronic device 100 needs to be replaced with the electronic device 600.

In some other embodiments, the electronic device 100 may cancel, in response to a touch operation performed on the cancel control 923, displaying the user interface 920, for example, display the user interface 910. In this case, the call forwarding configuration for forwarding the incoming call for the electronic device 200 to the electronic device 100 still takes effect.

Not limited to the case of the example in FIG. 3E, a manner of setting up a connection between the electronic device 200 and the electronic device 600 is different from a manner of setting up a connection between the electronic device 200 and the electronic device 100. For example, the connection set up between the electronic device 200 and the electronic device 600 is a WLAN, a sidelink, NFC, UWB, or infrared.

Not limited to the cases of the foregoing examples, in some other examples, the Bluetooth connection may alternatively be replaced with a WLAN, a sidelink, NFC, UWB, infrared, or the like.

The following describes call methods provided in embodiments of this application.

FIG. 4 is a schematic flowchart of a call method according to an embodiment of this application. The method may be applied to the call system 10 shown in FIG. 1A. The method may include but is not limited to the following steps.

S101: A Bluetooth connection is set up between an electronic device 100 and an electronic device 200.

In some embodiments, the electronic device 100 may send, to the electronic device 200, a request message for setting up the Bluetooth connection. For example, the electronic device 100 may display, on a Bluetooth settings screen, options of the electronic device 200 and another device that are scanned through Bluetooth. When the electronic device 100 receives a touch operation performed on the option of the electronic device 200, the electronic device 100 may send, to the electronic device 200, the request message for setting up the Bluetooth connection. After receiving the request message, the electronic device 200 may send a response message to the electronic device 100, to set up the Bluetooth connection between the electronic device 100 and the electronic device 200. In some other embodiments, the electronic device 200 may send, to the electronic device 100, a request message for setting up the Bluetooth connection. A specific example is similar to the foregoing example. Details are not described again.

It may be understood that, when the Bluetooth connection is set up between the electronic device 200 and the electronic device 100, the electronic device 200 may obtain a Bluetooth address of the electronic device 100, and the electronic device 100 may also obtain a Bluetooth address of the electronic device 200.

The call method provided in this application is described by using the Bluetooth connection as an example. However, this is not limited in this application. A connection setup manner may be one or more of wireless communication technologies such as a WLAN, Bluetooth, a sidelink, NFC, UWB, and infrared.

S102: The electronic device 200 sends an incoming call delegation request to the electronic device 100.

In some embodiments, the incoming call delegation request may be for requesting to implement a call forwarding configuration, and the call forwarding configuration includes forwarding an incoming call for a first number of the electronic device 200 to a second number of the electronic device 100. In some embodiments, the incoming call delegation request may include a first number of the electronic device 200. Optionally, the first number may also be referred to as a first number for which a call forwarding function needs to be enabled. Optionally, the first number may also be referred to as a call forwarding party number. In some embodiments, the incoming call delegation request may further include information indicating a call forwarding type.

The call forwarding type in this application may include but is not limited to at least one of the following:
Call forwarding unconditional: Incoming calls whose actual called number is the first number (which may also be referred to as incoming calls for the first number or incoming calls forwarded from the first number) are all forwarded to the second number. The electronic device 100 receives a request of the incoming call forwarded from the first number, and the electronic device 200 cannot receive the incoming call request.

Call forwarding busy: When the first number is in a call with another number (for example, when a user is in a call with another user by using the electronic device 200), the incoming call forwarded from the first number is forwarded to the second number.

Call forwarding no answer: When the electronic device 200 receives the request of the incoming call whose called number is the first number, but does not accept the incoming call request (for example, does not accept the incoming call request within preset duration), the incoming call forwarded from the first number is forwarded to the second number.

Call forwarding not reachable (no signal or power-off): When the electronic device 200 is powered off or has no signal (for example, cannot be connected to a base station), the incoming call forwarded from the first number is forwarded to the second number.

Understandably, at least two of the call forwarding busy, the call forwarding no answer, and the call forwarding not reachable may be set simultaneously. However, when the call forwarding unconditional is set, settings of the call forwarding busy, the call forwarding no answer, and the call forwarding not reachable are all invalid.

S103: The electronic device 100 sends an incoming call delegation response to the electronic device 200.

In some embodiments, the incoming call delegation response may be for responding to the incoming call delegation request, for example, indicate that implementation of the call forwarding configuration indicated by the incoming call delegation request is agreed. In some embodiments, the incoming call delegation response may include the second number of the electronic device 100. Optionally, the second number may also be referred to as a call forwarding target number. In some embodiments, the electronic device 100 may be configured with a plurality of SIM cards, namely, a plurality of phone numbers. The electronic device 100 may determine, based on priorities that are of the phone numbers and that are preset in a system or set by the user, a phone number to be sent to the electronic device 200. Optionally, when any two numbers are normally used (for example, when a wireless communication service provided by the base station is normal), the electronic device 100 may send a number having a higher priority to the electronic device 200. For an example of setting the priorities of the phone numbers by the user, refer to FIG. 3C. In FIG. 4, descriptions are provided by using an example in which the electronic device 100 includes only one second number or the second number is a number having a highest priority.

In FIG. 4, descriptions are provided by using an example in which the electronic device 200 sends the incoming call delegation request to the electronic device 100 and the electronic device 100 sends the incoming call delegation response to the electronic device 200. In some other embodiments, S102 may be replaced with that the electronic device 100 sends an incoming call delegation request to the electronic device 200, and S103 may be replaced with that the electronic device 200 sends an incoming call delegation response to the electronic device 100. In this case, a phone number included in the incoming call delegation request is the second number of the electronic device 100, and a phone number included in the incoming call delegation response is the first number of the electronic device 200.

In some embodiments, if the electronic device 100 is a device to which the electronic device 200 is connected through Bluetooth for the last time, the electronic device 100 may not send the second number to the electronic device 200, and/or the electronic device 200 may not send the first number to the electronic device 100. In some other embodiments, if the electronic device 100 is not a device to which the electronic device 200 is connected through Bluetooth for the last time, the electronic device 100 needs to send the second number to the electronic device 200, and the electronic device 200 also needs to send the first number to the electronic device 100.

S104: The electronic device 100 configures an incoming call delegation condition.

In some embodiments, after obtaining the first number of the electronic device 200, the electronic device 100 may perform an incoming call delegation configuration. The incoming call delegation configuration may include sending, to the electronic device 200 through the Bluetooth connection between the electronic device 100 and the electronic device 200, the incoming call forwarded from the first number. In some embodiments, if the electronic device 200 sends, to the electronic device 100, the information indicating the call forwarding type (which may be subsequently described briefly as sending the call forwarding type), assuming that the call forwarding type sent by the electronic device 200 is a first type, the incoming call delegation configuration may specifically include: sending, to the electronic device 200 through the Bluetooth connection between the electronic device 100 and the electronic device 200, an incoming call that is of the first type and that is forwarded from the first number.

In some embodiments, the incoming call delegation configuration may include a correspondence. Optionally, the correspondence may be used by the electronic device 100 to perform the incoming call delegation configuration. The correspondence is described as follows: In a case, the incoming call delegation configuration may include a first correspondence, and the first correspondence is that the first number corresponds to the Bluetooth connection (for example, a socket connection) between the electronic device 100 and the electronic device 200. In another case, the incoming call delegation configuration may include a second correspondence and a third correspondence. The second correspondence is that the first number corresponds to the electronic device 200, and the third correspondence is that the electronic device 200 corresponds to the Bluetooth connection between the electronic device 100 and the electronic device 200. In another case, the incoming call delegation configuration may include a second correspondence and a fourth correspondence. The second correspondence is that the first number corresponds to the electronic device 200, and the fourth correspondence is that the electronic device 200 corresponds to the Bluetooth address of the electronic device 200.

In some embodiments, the electronic device 100 may determine the incoming call delegation condition based on the incoming call delegation configuration. Optionally, the incoming call delegation condition may be for determining whether to perform the incoming call delegation configuration. When incoming call information satisfies the incoming call delegation condition, the incoming call delegation configuration may be performed. When incoming call information does not satisfy the incoming call delegation condition, the incoming call delegation configuration may not be performed. For specific examples, refer to S 109 and S 110, and S114 and S 115. Details are not described temporarily.

In some embodiments, the incoming call delegation condition may include that a received incoming call is the incoming call forwarded from the first number. In some embodiments, the incoming call delegation condition further includes that a call forwarding type indicated by the incoming call information is a call forwarding type that the electronic device 200 requests to configure, for example, the call forwarding type sent by the electronic device 200 by using the incoming call delegation request, or optionally, may be a call forwarding type included in the incoming call delegation configuration that may be referred to as a preconfigured call forwarding type subsequently. In some embodiments, the incoming call delegation condition further includes that the Bluetooth connection between the electronic device 100 and the electronic device 200 that has the first number is normal (that is, the electronic device 100 and the electronic device 200 remain in a connected state and may communication with each other).

A sequence of S 103 and S 104 is not limited.

S 105: The electronic device 200 sends first configuration information to a base station 300, to request to implement the call forwarding configuration (forwarding the incoming call for the first number to the second number).

For example, the electronic device 200 sends the first configuration information to the base station 300 through a Ut interface.

In some embodiments, the first configuration information may include the call forwarding target number, namely, the second number of the electronic device 100. Optionally, the first configuration information may not include the call forwarding party number (namely, the first number of the electronic device 200), and the base station 300 may obtain, when receiving the first configuration information, the first number of the electronic device 200 that sends the first configuration information. The electronic device 200 sends the first configuration information to request to implement the call forwarding configuration: forwarding the incoming call for the first number of the device (namely, the electronic device 200) to the call forwarding target number (namely, the second number). In some embodiments, the first configuration information further includes the information indicating the call forwarding type. For example, the call forwarding type indicated by the first configuration information is the call forwarding unconditional, and the first configuration information may be for requesting to implement a call forwarding configuration of the call forwarding unconditional (forwarding all of the incoming calls for the first number to the second number). In some embodiments, after receiving the first configuration information sent by the electronic device 200, the base station 300 may send the first configuration information to a core network 400, to request to implement the call forwarding configuration. In some embodiments, after completing the call forwarding configuration, the core network 400 may send first response information to the base station 300.

S106: The base station 300 sends the first response information to the electronic device 200.

In some embodiments, the first response information may be for responding to the first configuration information, for example, indicate that the call forwarding configuration that the first configuration information is for requesting to implement has been completed.

S107: The electronic device 200 disables a cellular communication function.

In some embodiments, after the call forwarding configuration is completed (for example, after the first response information sent by the base station 300 is received), when the Bluetooth connection between the electronic device 100 and the electronic device 200 is normal, the electronic device 200 may disable the cellular communication function. An implementation includes, for example, but is not limited to, not supplying power to a radio frequency module of a modem, not supplying power to the modem, or enabling the modem to sleep. When the electronic device 200 disables the cellular communication function, the electronic device 200 cannot communicate with the base station 300 and the core network 400, and cannot obtain a network service such as a voice service or a data service, but the electronic device 200 may maintain the Bluetooth connection to the electronic device 100.

In a possible implementation, after the call forwarding configuration is completed, and the electronic device 200 disables the cellular communication function, when the Bluetooth connection between the electronic device 100 and the electronic device 200 is normal, if the electronic device 100 receives the incoming call forwarded from the first number of the electronic device 200, the electronic device 100 may send corresponding incoming call indication information to the electronic device 200. For a specific example, refer to S108 to S111 below.

S108: The base station 300 sends first incoming call information to the electronic device 100.

In some embodiments, when receiving a first incoming call whose actual called number is the first number (namely, the first incoming call forwarded from the first number), the core network 400 may send, to the base station 300, the first incoming call information indicating the first incoming call (which may be subsequently referred to as information about the first incoming call forwarded from the first number). When receiving the information that is about the first incoming call forwarded from the first number and that is sent by the core network 400, the base station 300 may send the first incoming call information to the electronic device 100. Optionally, the first incoming call information may be understood as an incoming call request of the first incoming call.

In some embodiments, the first incoming call information may include a calling number (namely, a phone number that initiates the first incoming call), the actual called number (namely, the call forwarding party number), and a target address (namely, the call forwarding target number). In some embodiments, the first incoming call information further includes the information indicating the call forwarding type. Specific examples are as follows.

Example 1: The first incoming call belongs to Internet Protocol (Internet protocol, IP) multimedia subsystem (IP Multimedia Subsystem, IMS) calling. The first incoming call information is a session initiation protocol (session initiation protocol, SIP) invite (invite) request. The first incoming call information includes a request uniform resource identifier (uniform resource identifier, uri) (request URI), namely, the foregoing target address. The request URI is the second number of the electronic device 100. The first incoming call information further includes the calling (from) number. The first incoming call information further includes history information (History-Info). The History-Info includes a history (history, hi) targeted URI (hi-targeted-to-uri), namely, the foregoing actual called number. The hi-targeted-to-uri is the first number of the electronic device 200. The first incoming call information further includes a history target parameter (hi-target-param), namely, the foregoing information indicating the call forwarding type. For example, the information is 302, and indicates the call forwarding unconditional.

Example 2: The first incoming call belongs to circuit switched (circuit switched, CS) calling. The first incoming call information is a setup (Setup) request. The first incoming call information includes the target address, namely, the second number of the electronic device 100. The first incoming call information further includes a calling party binary-coded decimal (binary-coded decimal, BCD) number (Calling party BCD Number), namely, the foregoing calling number. The first incoming call information further includes a redirecting party BCD number (Redirecting party BCD number), namely, the foregoing actual called number. The redirecting party BCD number is the first number of the electronic device 200. The first incoming call information further includes a facility (Facility), namely, the foregoing information indicating the call forwarding type. For example, the information is the call forwarding unconditional (call forwarding unconditional, CFU), and indicates the call forwarding unconditional.

S109: The electronic device 100 determines whether the first incoming call information satisfies the incoming call delegation condition.

In some embodiments, the incoming call delegation condition may include that the received incoming call is the incoming call forwarded from the first number, and may be referred to as a first condition. The electronic device 100 may determine, depending on whether the first incoming call information includes a first parameter, whether the first incoming call is the incoming call forwarded from the first number. When the first incoming call information includes the first parameter, the first incoming call is the incoming call forwarded from the first number. Optionally, the electronic device 100 may further determine, depending on whether the first parameter includes the first number, whether the first incoming call is the incoming call forwarded from the first number. When the first incoming call information includes the first parameter, and the first parameter includes the first number, the first incoming call is the incoming call forwarded from the first number. The first parameter is, for example, but is not limited to, the hi-targeted-to-uri in the foregoing Example 1, or the redirecting party BCD number in the foregoing Example 2.

In some embodiments, the incoming call delegation condition further includes that the call forwarding type indicated by the incoming call information is the preconfigured call forwarding type, and may be referred to as a second condition. The electronic device 100 may determine, based on a second parameter included in the first incoming call information, the call forwarding type indicated by the first incoming call information (which may also be understood as that the second parameter indicates the call forwarding type), thereby determining whether the call forwarding type indicated by the first incoming call information is the preconfigured call forwarding type. The second parameter is, for example, but is not limited to, the hi-target-param in the foregoing Example 1 or the facility in the foregoing Example 2.

In some embodiments, the incoming call delegation condition further includes that the Bluetooth connection between the electronic device 100 and the electronic device 200 that has the first number is normal (that is, the electronic device 100 and the electronic device 200 remain in the connected state and may communication with each other), and may be referred to as a third condition.

In some embodiments, the incoming call delegation condition includes the first condition, but does not include the second condition and the third condition. In some other embodiments, the incoming call delegation condition includes the first condition and the second condition, but does not include the third condition. A sequence of determining, by the electronic device 100, whether the first incoming call information satisfies the first condition and determining, by the electronic device 100, whether the first incoming call information satisfies the second condition is not limited. In some other embodiments, the incoming call delegation condition includes the first condition and the third condition, but does not include the second condition. A sequence of determining, by the electronic device 100, whether the first incoming call information satisfies the first condition and determining, by the electronic device 100, whether the first incoming call information satisfies the third condition is not limited. In some other embodiments, the incoming call delegation condition includes the first condition, the second condition, and the third condition. A sequence of determining, by the electronic device 100, whether the first incoming call information satisfies the first condition, determining, by the electronic device 100, whether the first incoming call information satisfies the second condition, and determining, by the electronic device 100, whether the first incoming call information satisfies the third condition is not limited.

In some embodiments, when determining results of S109 are different, the electronic device 100 performs different operations. For a specific example, refer to Table 1 below.

**Table 1**

| | | Whether a condition is satisfied | | |
|---|---|---|---|---|
| Incoming call delegation condition | Whether a first incoming call is an incoming call forwarded from a first number (a first condition) | Yes | Yes | No |
| | Whether a call forwarding type indicated by first incoming call information is a preconfigured call forwarding type (a second condition) | Yes | Yes or no | Yes or no |
| | Whether a Bluetooth connection between an electronic device 100 and an electronic device 200 that has the first number is normal (a third condition) | Yes | No | Yes or no |
| Operation performed by the electronic device 100 | | Do not output an incoming call notification, and send incoming call indication information to the electronic device 200 | The electronic device 100 outputs the incoming call notification or rejects the incoming call | The electronic device 100 outputs the incoming call notification |

As shown in Table 1, when the first incoming call information satisfies the first condition, the second condition, and the third condition, the electronic device 100 may send, to the electronic device 200, incoming call indication information corresponding to the first incoming call (that is, perform S110), so that the electronic device 200 outputs the incoming call notification corresponding to the first incoming call, and the electronic device 100 does not output the incoming call notification.

As shown in Table 1, when the first incoming call information satisfies the first condition but does not satisfy the third condition, that is, the Bluetooth connection between the electronic device 100 and the electronic device 200 that has the first number is currently abnormal (for example, has been broken) although the first incoming call is the incoming call forwarded from the first number, the electronic device 100 may output the incoming call notification corresponding to the first incoming call, or directly reject the first incoming call. For a specific example, refer to the descriptions of S112 to S115. Details are not described temporarily.

As shown in Table 1, when the first incoming call information does not satisfy the first condition, that is, the first incoming call is not the incoming call forwarded from the first number, but an incoming call for the second number of the electronic device 100, the electronic device 100 may output the incoming call notification corresponding to the first incoming call.

In Table 1, descriptions are provided by using an example in which the incoming call delegation condition includes the first condition, the second condition, and the third condition. In some other embodiments, a result of determining whether a condition is satisfied is "yes or no" may alternatively be replaced with that the electronic device 100 does not determine the condition, that is, the incoming call delegation condition does not include the condition. For example, the incoming call delegation condition includes the first condition and the third condition, but does not include the second condition. When the first incoming call information satisfies the first condition but does not satisfy the third condition, the electronic device 100 outputs the incoming call notification or rejects the first incoming call. For another example, the incoming call delegation condition includes the first condition, but does not include the second condition and the third condition. When the first incoming call does not satisfy the first condition, the electronic device 100 outputs the incoming call notification.

In Table 1, descriptions are provided by using an example in which the delegation condition includes the first condition, the second condition, and the third condition. Other cases are similar to the cases shown in Table 1. For example, the incoming call delegation condition includes the first condition, but does not include the second condition and the third condition. When the first incoming call information satisfies the first condition, the electronic device 100 does not output the incoming call notification, and sends the incoming call indication information to the electronic device 200. When the first incoming call information does not satisfy the first condition, the electronic device 100 outputs the incoming call notification. For another example, the incoming call delegation condition includes the first condition and the second condition, but does not include the third condition. When the first incoming call information satisfies the first condition and the second condition, the electronic device 100 does not output the incoming call notification, and sends the incoming call indication information to the electronic device 200. When the first incoming call information satisfies the first condition but does not satisfy the second condition, the electronic device 100 outputs the incoming call notification or rejects the incoming call. When the first incoming call information does not satisfy the first condition, the electronic device 100 outputs the incoming call notification.

S110: When the first incoming call information satisfies the incoming call delegation condition, the electronic device 100 sends the incoming call indication information to the electronic device 200.

In some embodiments, when the first incoming call information satisfies the incoming call delegation condition (including the foregoing first condition), the electronic device 100 may determine that the first incoming call indicated by the first incoming call information is the incoming call forwarded from the first number. The electronic device 100 may send, based on the incoming call delegation configuration implemented in S104, the incoming call indication information corresponding to the first incoming call to the electronic device 200 through the Bluetooth connection to the electronic device 200 that has the first number. The incoming call indication information may indicate that there is a first incoming call currently. The incoming call indication information may include information indicating the calling number of the first incoming call. Optionally, the incoming call indication information may further include information indicating the actual called number (namely, the call forwarding party number, namely, the first number).

In a case, the incoming call delegation configuration includes the first correspondence: The first number corresponds to the Bluetooth connection between the electronic device 100 and the electronic device 200. When determining that the first incoming call is the incoming call forwarded from the first number, the electronic device 100 may determine, based on the first correspondence, the Bluetooth connection corresponding to the first number, and then send, to the electronic device 200 through the Bluetooth connection, the incoming call indication information corresponding to the first incoming call.

In another case, the incoming call delegation configuration includes the second correspondence (the first number corresponds to the electronic device 200) and the third correspondence (the electronic device 200 corresponds to the Bluetooth connection between the electronic device 100 and the electronic device 200). When determining that the first incoming call is the incoming call forwarded from the first number, the electronic device 100 may determine, based on the second correspondence, that the first number is a number of the electronic device 200, determine the Bluetooth connection to the electronic device 200 based on the third correspondence, and then send, to the electronic device 200 through the Bluetooth connection, the incoming call indication information corresponding to the first incoming call.

In another case, the incoming call delegation configuration includes the second correspondence (the first number corresponds to the electronic device 200) and the fourth correspondence (the electronic device 200 corresponds to the Bluetooth address of the electronic device 200). When determining that the first incoming call is the incoming call forwarded from the first number, the electronic device 100 may determine, based on the second correspondence, that the first number is a number of the electronic device 200, determine the Bluetooth address of the electronic device 200 based on the third correspondence, and then send, to the Bluetooth address, the incoming call indication information corresponding to the first incoming call.

S111: The electronic device 200 outputs the incoming call notification (in this case, the electronic device 100 does not output the incoming call notification corresponding to the first incoming call).

In some embodiments, the electronic device 200 may output, based on the received incoming call indication information, the incoming call notification corresponding to the first incoming call. The incoming call notification may include the information indicating the calling number of the first incoming call. Optionally, the incoming call notification may further include the information indicating the actual called number of the first incoming call (namely, the call forwarding party number, namely, the first number of the electronic device 200). For example, in the embodiment shown in FIG. 3A, the user interface 620 displayed by the electronic device 200 includes the prompt information 621 and the prompt information 622. The prompt information 621 indicates the calling number of the first incoming call, and the prompt information 622 indicates the actual called number of the first incoming call.

In a possible implementation, after the call forwarding configuration is completed, and the electronic device 200 disables the cellular communication function, when the Bluetooth connection between the electronic device 100 and the electronic device 200 is broken, if the electronic device 100 receives the incoming call forwarded from the first number of the electronic device 200, the electronic device 100 may output the incoming call notification or reject the incoming call. For a specific example, refer to S112 to S117 below.

S112: The Bluetooth connection between the electronic device 100 and the electronic device 200 is broken.

In some embodiments, the Bluetooth connection between the electronic device 100 and the electronic device 200 may be broken because the user manually disables Bluetooth of the electronic device 100 or the electronic device 200. In some embodiments, when the user manually disables Bluetooth of the electronic device 100 or the electronic device 200, the electronic device 100 or the electronic device 200 may output prompt information, to prompt the user with a case in which disabling Bluetooth will cancel the call forwarding configuration (forwarding the incoming call for the first number to the second number), thereby avoiding a case in which the call forwarding configuration is invalid due to a misoperation of the user. For a specific example, refer to the embodiment shown in FIG. 3D-1 and FIG. 3D-2.

This is not limited thereto. In some other embodiments, the Bluetooth connection between the electronic device 100 and the electronic device 200 may alternatively be broken because a distance between the electronic device 100 and the electronic device 200 exceeds a preset distance. In some other embodiments, the Bluetooth connection between the electronic device 100 and the electronic device 200 may alternatively be broken because duration for which the user does not wear the electronic device 200 exceeds preset duration. A trigger condition for breaking the Bluetooth connection is not limited in this application.

In some embodiments, breaking of the Bluetooth connection between the electronic device 100 and the electronic device 200 may trigger the electronic device 200 to enable the cellular communication function and request the base station 300 to cancel the call forwarding configuration indicated by the first configuration information in S105, that is, trigger the electronic device 200 to perform S 116 and S117. In some other embodiments, that breaking of the Bluetooth connection between the electronic device 100 and the electronic device 200 exceeds preset duration (for example, three minutes) may trigger the electronic device 200 to perform S 116 and S 117.

S113: The base station 300 sends second incoming call information to the electronic device 100.

In some embodiments, when receiving a second incoming call whose actual called number is the first number (namely, the second incoming call forwarded from the first number), the core network 400 may send, to the base station 300, the second incoming call information indicating the second incoming call. When receiving the information that is about the second incoming call forwarded from the first number and that is sent by the core network 400, the base station 300 may send the second incoming call information to the electronic device 100. Descriptions of the second incoming call information are similar to the descriptions of the first incoming call information in S108. Details are not described again.

S 114: The electronic device 100 determines whether the second incoming call information satisfies the incoming call delegation condition.

S 114 is similar to S109. Details are not described again.

S115: When the second incoming call information does not satisfy the incoming call delegation condition (when it is determined that the Bluetooth connection to the electronic device 200 is broken), the electronic device 100 outputs an incoming call notification or rejects the second incoming call indicated by the second incoming call information.

In some embodiments, that the second incoming call information does not satisfy the incoming call delegation condition may include: The second incoming call is the incoming call forwarded from the first number (that is, the first condition is satisfied), but the Bluetooth connection between the electronic device 100 and the electronic device 200 that has the first number is broken (that is, the third condition is not satisfied). In this case, the electronic device 100 may output the incoming call notification corresponding to the second incoming call, or directly reject the second incoming call (without outputting the incoming call notification). The incoming call notification corresponding to the second incoming call is similar to the incoming call notification in S111. Details are not described again.

S116: The electronic device 200 enables the cellular communication function.

In some embodiments, after the Bluetooth connection between the electronic device 100 and the electronic device 200 is broken (for example, when breaking time exceeds the preset duration), the electronic device 200 may enable the cellular communication function. An implementation includes, for example, but is not limited to, supplying the power to the radio frequency module of the modem, supplying the power to the modem, or canceling sleep of the modem. It may be understood that the implementation of enabling the cellular communication function in S 116 corresponds to the implementation of disabling the cellular communication function in S107. For example, if the power is not supplied to the modem in S107, and the power is supplied to the modem in S116.

S117: The electronic device 200 sends second configuration information to the base station 300, to request to cancel the call forwarding configuration.

In some embodiments, the second configuration information may be for requesting to cancel the call forwarding configuration (forwarding the incoming call for the first number to the second number) requested to be implemented in S105. In some embodiments, after receiving the second configuration information sent by the electronic device 200, the base station 300 may send the second configuration information to the core network 400. The core network 400 may cancel, in response to the second configuration information, the previously completed call forwarding configuration (forwarding the incoming call for the first number to the second number). When subsequently receiving an incoming call whose called number is the first number of the electronic device 200, the core network 400 sends corresponding incoming call information to the electronic device 200 via the base station 300.

A sequence of S116 and any one of S113 to S115 is not limited.

In the method shown in FIG. 4, the phone numbers of the electronic device 100 and the electronic device 200 are different. After the electronic device 200 disables the cellular communication function, the incoming call for the electronic device 200 is forwarded to the electronic device 100, and is not missed. In other words, even if the electronic device 200 does not support a multi-terminal with one number service, low power consumption and normal receiving of an incoming call request can still be both considered.

In addition, when the electronic device 100 receives the incoming call forwarded from the first number of the electronic device 200, the electronic device 100 does not output the incoming call notification, and the electronic device 200 outputs the incoming call notification. The electronic device 100 outputs the incoming call notification only when receiving an incoming call whose called number is the second number of the electronic device 100 (or when the Bluetooth connection to the electronic device 200 is broken). In other words, for incoming calls with different actual called numbers, devices corresponding to the actual called numbers output incoming call notifications, which may be well applicable to some specific scenarios, like a scenario in which the user carries the electronic device 200 but does not carry the electronic device 100, for example, a scenario in which the user carries a smartwatch (the electronic device 200) for running outside. In these specific scenarios, for the incoming call forwarded from the first number of the electronic device 200, the electronic device 100 does not output the incoming call notification. This can ensure privacy of the user, can also reduce power consumption of the electronic device 100, better satisfy a requirement of the user, and has higher practicability.

In FIG. 4, descriptions are provided by using an example in which the electronic device 200 directly obtains the second number of the electronic device 100 through the Bluetooth connection to the electronic device 100. In some other embodiments, security management may be performed, by using a server 500, on a process of obtaining the second number. For specific examples, refer to FIG. 5 and FIG. 6.

FIG. 5 is a schematic flowchart of another call method according to an embodiment of this application. The method may be applied to the call system 10 shown in FIG. 1B. The method may include but is not limited to the following steps.

S201: An electronic device 200 sends first registration information to a server 500.

In some embodiments, the first registration information includes a first number and a Bluetooth address that are of the electronic device 200.

S202: An electronic device 100 sends second registration information to the server 500.

In some embodiments, the second registration information includes a second number and a Bluetooth address that are of the electronic device 100.

A sequence of S201 and S202 is not limited.

S203: A Bluetooth connection is set up between the electronic device 200 and the electronic device 100.

S203 is similar to S101 in FIG. 4. For details, refer to the descriptions of S101 in FIG. 4.

A sequence of S203 and S201 is not limited, and a sequence of S203 and S202 is not limited.

S204: The electronic device 200 sends first request information to the server 500.

In some embodiments, the first request information may be for requesting to implement a call forwarding configuration, and the call forwarding configuration includes forwarding an incoming call for the first number of the electronic device 200 to the number of the electronic device 100. In some embodiments, the first request information may include the Bluetooth address of the electronic device 100. Because the electronic device 100 has sent the second registration information to the server 500, the server 500 may determine the phone number of the electronic device 100, namely, the second number, based on the Bluetooth address that is of the electronic device 100 and that is included in the first request information. In some embodiments, the first request information may further include information indicating a call forwarding type.

S205: The server 500 determines that the Bluetooth address that is of the electronic device 100 and that is included in the first request information is a trusted address.

In some embodiments, the server 500 may determine a Bluetooth address of a device that may manage the electronic device 200 as the trusted address. For example, a Bluetooth address of a device that has been registered with the server 500 is the trusted address, and the device may be specifically a device that has sent registration information to the server 500. For another example, a Bluetooth address of a device that has been registered with the server 500 and has not expired is the trusted address, and the device may be specifically a device that has sent registration information to the server 500, where a difference between a sending moment (which may alternatively be a moment at which the server 500 receives the registration information) and a current moment is less than preset duration. This is not limited thereto. In some other embodiments, the server 500 may determine a Bluetooth address of a device that is set by a user and that is allowed to be used as a call forwarding target as the trusted address. For example, in the embodiment shown in FIG. 3B, the user may set a phone number (referred to as a trusted number for short) that is allowed to be used as a call forwarding target number, and a Bluetooth address of a device whose phone number is the trusted number is the trusted address. A specific manner of determining the trusted address is not limited in this application.

S206: The server 500 sends third configuration information to the electronic device 100, to implement the call forwarding configuration (forwarding the incoming call for the first number to the second number).

In some embodiments, when determining that the Bluetooth address that is of the electronic device 100 and that is included in the first request information is the trusted address, the server 500 may send the third configuration information to the electronic device 100. The third configuration information may be for requesting to implement the call forwarding configuration, and the call forwarding configuration includes forwarding the incoming call for the first number of the electronic device 200 to the second number of the electronic device 100. In some embodiments, the third configuration information includes a call forwarding party number, namely, the first number of the electronic device 200. Optionally, the third configuration information further includes the information indicating the call forwarding type. For example, the call forwarding type indicated by the third configuration information is call forwarding unconditional, and the third configuration information may be for requesting to implement a call forwarding configuration of the call forwarding unconditional (forwarding all of incoming calls for the first number to the second number).

S207: The electronic device 100 configures an incoming call delegation condition.

In some embodiments, after receiving the third configuration information sent by the server 500, the electronic device 100 may perform an incoming call delegation configuration. In some embodiments, the electronic device 100 may determine the incoming call delegation condition based on the incoming call delegation configuration. For descriptions of the incoming call delegation configuration and the incoming call delegation condition, refer to the descriptions of the incoming call delegation configuration and the incoming call delegation condition in S104 in FIG. 4. Details are not described again.

S208: The electronic device 100 sends, to the server 500, indication information indicating that the incoming call delegation configuration is completed.

In some embodiments, after performing the incoming call delegation configuration, the electronic device 100 may send, to the server 500, the indication information indicating that the incoming call delegation configuration is completed. Optionally, the indication information may indicate that implementation of the call forwarding configuration that the third configuration information is for requesting to implement is agreed/the call forwarding configuration that the third configuration information is for requesting to implement has been completed. In this case, S208 is after S207.

In some other embodiments, after receiving the third configuration information sent by the server 500, the electronic device 100 may send, to the server 500, the indication information indicating that the incoming call delegation configuration is completed. Optionally, the indication information may indicate that implementation of the call forwarding configuration that the third configuration information is for requesting to implement is agreed. In this case, S208 is before S207, or S208 and S207 are performed simultaneously.

In other words, a sequence of S207 and S208 is not limited.

S209: The server 500 sends second response information to the electronic device 200.

In some embodiments, after receiving the indication information indicating that the incoming call delegation configuration is completed, the server 500 may send the second response information to the electronic device 200. The second response information may include the second number of the electronic device 100.

In some embodiments, after receiving the second response information, the electronic device 200 may request the base station 300 to implement the call forwarding configuration (forwarding the incoming call for the first number to the second number). A subsequent procedure is similar to S105 to S117 in FIG. 4. When the electronic device 200 outputs an incoming call notification based on received incoming call indication information, the electronic device 100 may output the incoming call notification, or may not output the incoming call notification.

In FIG. 5, descriptions are provided by using an example in which the server 500 sends the second response information to the electronic device 200. In some other embodiments, 5209 may be replaced with that the electronic device 100 sends the second response information to the electronic device 200. In S206, the server 500 further sends the Bluetooth address of the electronic device 200 to the electronic device 100. For example, the third configuration information includes the Bluetooth address of the electronic device 200, so that the electronic device 100 can perform S209 obtained through the foregoing replacement.

FIG. 6 is a schematic flowchart of another call method according to an embodiment of this application. The method may be applied to the call system 10 shown in FIG. 1B. The method may include but is not limited to the following steps.

S301: An electronic device 100 sends second registration information to a server 500.

S301 is similar to S202 in FIG. 5. For details, refer to the descriptions of S202 in FIG. 5.

S302: An electronic device 200 sends first registration information to the server 500.

S302 is similar to S201 in FIG. 5. For details, refer to the descriptions of S201 in FIG. 5.

S303: The server 500 sends a trusted address to the electronic device 200.

In some embodiments, after receiving the first registration information sent by the electronic device 200, the server 500 may send the trusted address to the electronic device 200. For descriptions of the trusted address, refer to the descriptions of the trusted address in S205 in FIG. 5.

S304: A Bluetooth connection is set up between the electronic device 200 and the electronic device 100.

S304 is similar to S101 in FIG. 4. For details, refer to the descriptions of S101 in FIG. 4.

S305: The electronic device 200 determines that a Bluetooth address of the electronic device 100 is the trusted address.

In some embodiments, when the Bluetooth connection is set up between the electronic device 200 and the electronic device 100, the electronic device 200 may obtain the Bluetooth address of the electronic device 100. The electronic device 200 may determine whether the trusted address sent by the server 500 includes the Bluetooth address of the electronic device 100. When determining that the Bluetooth address of the electronic device 100 is the trusted address, the electronic device 200 may perform S306.

S306: The electronic device 200 sends first request information to the server 500.

S306 is similar to S204 in FIG. 5. For details, refer to S204 in FIG. 5.

S307: The server 500 sends third configuration information to the electronic device 100, to implement a call forwarding configuration (forwarding an incoming call for a first number to a second number).

In some embodiments, after receiving the first request information sent by the electronic device 200, the server 500 may send the third configuration information to the electronic device 100. For descriptions of the third configuration information, refer to the descriptions of the third configuration information in S206 in FIG. 5. Details are not described again.

S308: The electronic device 100 configures an incoming call delegation condition.

S309: The electronic device 100 sends, to the server 500, indication information indicating that an incoming call delegation configuration is completed.

S310: The server 500 sends second response information to the electronic device 200.

S308 to S310 are similar to S207 to S209 in FIG. 5. For details, refer to the descriptions of S207 to S209 in FIG. 5.

In some embodiments, after receiving the second response information, the electronic device 200 may request a base station 300 to implement the call forwarding configuration (forwarding the incoming call for the first number to the second number). A subsequent procedure is similar to S105 to S117 in FIG. 4. When the electronic device 200 outputs an incoming call notification based on received incoming call indication information, the electronic device 100 may output the incoming call notification, or may not output the incoming call notification.

In FIG. 6, descriptions are provided by using an example in which the server 500 sends the second response information to the electronic device 200. In some other embodiments, S310 may be replaced with that the electronic device 100 sends the second response information to the electronic device 200. In S307, the server 500 further sends a Bluetooth address of the electronic device 200 to the electronic device 100. For example, the third configuration information includes the Bluetooth address of the electronic device 200, so that the electronic device 100 can perform S310 obtained through the foregoing replacement.

It may be understood that because Bluetooth connections between a smartphone and some wearable devices (for example, a Bluetooth headset) do not need a connection password, or a Bluetooth connection password may be cracked by using cracking software, obtaining a phone number through the Bluetooth connection (for example, in the method shown in FIG. 4, the electronic device 100 directly obtains the first number of the electronic device 200 through the Bluetooth connection, and the electronic device 200 directly obtains the second number of the electronic device 100 through the Bluetooth connection) may result in a case in which a malicious user illegally obtains the phone number.

However, in the methods shown in FIG. 5 and FIG. 6, the server 500 sends the third configuration information to the call forwarding target (namely, the electronic device 100) only when a Bluetooth address (namely, the Bluetooth address that is of the electronic device 100 and that is sent in the first request information) of a device that the electronic device 200 requests to use as the call forwarding target is the trusted address, so that the electronic device 100 obtains the first number of the electronic device 200, and the electronic device 200 obtains the second number of the electronic device 100. It may be understood that the electronic device 100 and the electronic device 200 can obtain the numbers of each other only when the user allows the electronic device 100 to perform an incoming call delegation service for the electronic device 200 or the user allows the electronic device 100 to manage the electronic device 200. In other words, in this application, security management may be performed, by using the server 500, on a process of obtaining the phone number, to avoid illegally obtaining the phone number of the electronic device by the malicious user.

In some embodiments, after a call forwarding configuration (forwarding an incoming call for an electronic device 200 to an electronic device 100) is completed, the electronic device 200 may maintain a Bluetooth connection to the electronic device 100. In this case, if a Bluetooth connection is set up between the electronic device 200 and another device (assumed to be an electronic device 600), the electronic device 200 may switch a call forwarding target to the electronic device 600. For a specific example, refer to FIG. 7 below.

FIG. 7 is a schematic flowchart of another call method according to an embodiment of this application. The method may be applied to the call system 10 shown in FIG. 1A. The method may include but is not limited to the following steps.

S401: A Bluetooth connection is set up between an electronic device 200 and an electronic device 100.

S402: The electronic device 200 sends an incoming call delegation request to the electronic device 100.

S403: The electronic device 100 sends an incoming call delegation response to the electronic device 200.

S404: The electronic device 100 configures an incoming call delegation condition.

S405: The electronic device 200 sends first configuration information to a base station 300, to request to implement a call forwarding configuration (forwarding an incoming call for a first number to a second number).

S406: The base station 300 sends first response information to the electronic device 200.

S407: The electronic device 200 disables a cellular communication function.

S401 to S407 are consistent with S101 to S107 in FIG. 4. For details, refer to the descriptions of S101 to S107 in FIG. 4.

In some embodiments, after S407, when the Bluetooth connection between the electronic device 100 and the electronic device 200 is normal, if the electronic device 100 receives the incoming call forwarded from the first number of the electronic device 200, the electronic device 100 may send corresponding incoming call indication information to the electronic device 200. A specific procedure is similar to S108 to S111 in FIG. 4.

S408: A Bluetooth connection is set up between the electronic device 200 and an electronic device 600.

S408 is similar to S101 in FIG. 4. For details, refer to the descriptions of S101 in FIG. 4.

In some embodiments, after the Bluetooth connection is set up between the electronic device 200 and the electronic device 600, the electronic device 200 may output prompt information, to prompt a user whether to update a call forwarding target to the currently connected electronic device 600. For example, in the embodiment shown in FIG. 3E, the electronic device 200 may display the user interface 920, and the user interface 920 includes the prompt message 921 (namely, the foregoing prompt information). In some embodiments, the electronic device 200 may receive a user operation for updating the call forwarding target. For example, in the embodiment shown in FIG. 3E, the electronic device 200 may receive the touch operation performed on the OK control 922 on the user interface 920. The electronic device 200 may update, based on the user operation, the call forwarding target to the currently connected electronic device 600, for example, perform S409 to S414.

In some embodiments, after the Bluetooth connection is set up between the electronic device 200 and the electronic device 600, the electronic device 200 may determine, based on a type of the electronic device 600, whether to output the foregoing prompt information. Optionally, when the type of the electronic device 600 is a preset type, the foregoing prompt information is output. For example, the call forwarding target needs a SIM card, a device such as a smartphone or a tablet computer usually has a SIM card, and a device such as a smart speaker or a Bluetooth headset usually does not have the SIM card. The electronic device 200 may display, when being connected to the device such as the smartphone or the tablet computer, the user interface 920 shown in FIG. 3E, but does not display, when being connected to the device such as the smart speaker or the Bluetooth headset, the user interface 920 shown in FIG. 3E, and keeps displaying a current interface.

S409: The electronic device 200 enables the cellular communication function.

In some embodiments, after determining to update the call forwarding target to the currently connected electronic device 600, the electronic device 200 may enable the cellular communication function, to request the base station 300 to implement a call forwarding configuration (forwarding the incoming call for the first number to a third number of the electronic device 600), for example, perform S413 and S414.

S410: The electronic device 200 sends second request information to the electronic device 600.

S410 is similar to S402. For details, refer to the descriptions of S402. The electronic device 100 needs to be replaced with the electronic device 600, and the second number needs to be replaced with the third number of the electronic device 600. For descriptions of the second request information, refer to the descriptions of the incoming call delegation request.

S411: The electronic device 600 sends third response information to the electronic device 200.

S411 is similar to S403. For details, refer to the descriptions of S403. The electronic device 100 needs to be replaced with the electronic device 600, and the second number needs to be replaced with the third number of the electronic device 600. For descriptions of the third response information, refer to the descriptions of the incoming call delegation response.

S412: The electronic device 600 configures a first delegation condition.

S412 is similar to S404. For details, refer to the descriptions of S404. The electronic device 100 needs to be replaced with the electronic device 600, and the second number needs to be replaced with the third number of the electronic device 600. For descriptions of the first delegation condition, refer to the descriptions of the incoming call delegation condition.

S413: The electronic device 200 sends fourth configuration information to the base station 300, to request to implement the call forwarding configuration (forwarding the incoming call for the first number to the third number).

In some embodiments, after receiving the fourth configuration information sent by the electronic device 200, the base station 300 may send the fourth configuration information to a core network 400, to request to implement the call forwarding configuration.

In some embodiments, after receiving the fourth configuration information sent by the base station 300, the core network 400 cancels the previous call forwarding configuration (forwarding the incoming call for the first number to the second number), that is, cancels the call forwarding configuration that the first configuration information is for requesting to implement in S405, and implements the new call forwarding configuration (forwarding the incoming call for the first number to the second number), that is, implements the call forwarding configuration that the fourth configuration information is for requesting to implement in S413.

For descriptions of the fourth configuration information, refer to the descriptions of the first configuration information in S405. The electronic device 100 needs to be replaced with the electronic device 600, and the second number needs to be replaced with the third number of the electronic device 600.

S414: The base station 300 sends fourth response information to the electronic device 200.

S414 is similar to S406. For details, refer to the descriptions of S406. The electronic device 100 needs to be replaced with the electronic device 600, and the second number needs to be replaced with the third number of the electronic device 600. For descriptions of the fourth response information, refer to the descriptions of the first response information.

S415: The electronic device 200 disables the cellular communication function.

S415 is similar to S407. For details, refer to the descriptions of S407.

In some embodiments, after S415, when the Bluetooth connection between the electronic device 200 and the electronic device 600 is normal, if the electronic device 600 receives the incoming call forwarded from the first number of the electronic device 200, the electronic device 600 may send the corresponding incoming call indication information to the electronic device 200. A specific procedure is similar to S108 to S111 in FIG. 4. When the electronic device 200 outputs an incoming call notification based on the received incoming call indication information, the electronic device 100 may output the incoming call notification, or may not output the incoming call notification.

In some embodiments, after S415, when the Bluetooth connection between the electronic device 200 and the electronic device 600 is broken, if the electronic device 600 receives the incoming call forwarded from the first number of the electronic device 200, the electronic device 600 may output an incoming call notification or reject the incoming call. A specific procedure is similar to S112 to S117 in FIG. 4.

In a possible implementation method, the method further includes: S416: The electronic device 200 sends, to the electronic device 100, indication information for canceling incoming call delegation.

In some embodiments, after determining to update the call forwarding target to the currently connected electronic device 600, the electronic device 200 may send, to the electronic device 100, the indication information for canceling the incoming call delegation. Optionally, the indication information may indicate to cancel the previous call forwarding configuration (forwarding the incoming call for the first number to the second number), that is, cancel the call forwarding configuration indicated by the incoming call delegation request in S402. In some embodiments, after receiving the indication information, the electronic device 100 may cancel an incoming call delegation configuration (for details, refer to the incoming call delegation configuration in S104 in FIG. 4, where S104 in FIG. 4 corresponds to S404 in FIG. 7). Optionally, the electronic device 100 may delete the incoming call delegation condition in S404.

A sequence of S416 and any one of S409 to S415 is not limited.

In FIG. 7, descriptions are provided by using an example in which the electronic device 200 directly obtains the second number of the electronic device 100 through the Bluetooth connection. Specific descriptions are similar to the procedure shown in FIG. 4. In some other embodiments, security management may alternatively be performed, by using the server 500, on a process of obtaining the second number. For example, S401 to S404 in FIG. 7 are modified to the procedure shown in FIG. 5 or FIG. 6, and/or S408 and S410 to S412 in FIG. 7 are modified to the procedure shown in FIG. 5 or FIG. 6. When S408 and S410 to S412 are modified, the descriptions of the electronic device 100 in FIG. 5 or FIG. 6 need to be replaced with descriptions of the electronic device 600.

In FIG. 7, descriptions are provided by using an example in which a manner of setting up a connection between the electronic device 200 and the electronic device 100 is the same as a manner of setting up a connection between the electronic device 200 and the electronic device 600. In some other embodiments, the two manners may be different.

In the method shown in FIG. 7, when the electronic device 200 is newly connected to the electronic device 600, the call forwarding target may be updated to the electronic device 600 based on the user operation, so that the call forwarding configuration is intelligently switched, and use is more convenient for the user.

In this application, descriptions are provided by using an example in which information communicated between the base station 300 and the core network 400 is consistent with information communicated between the base station 300 and the electronic device. However, in specific implementation, a form of information transmission is not limited. For example, after receiving the first configuration information sent by the electronic device 200, the base station 300 sends an indication or information including the first configuration information to the core network 400.

It may be understood that the communication system architecture and the service scenario described in this application are intended to describe the technical solutions in this application more clearly, and do not constitute a limitation on the technical solutions provided in this application. A person of ordinary skill in the art may know that with the evolution of the communication system architecture and the emergence of new service scenarios, the technical solutions provided in this application are also applicable to similar technical problems. A person of ordinary skill in the art may understand that all or some of the procedures of the methods in the foregoing embodiments may be completed by a computer program instructing related hardware. The computer program may be stored in a computer-readable storage medium. When the computer program is executed, the procedures in the foregoing method embodiments are performed. The foregoing storage medium includes: any medium that can store computer program code, such as a read-only memory (read-only memory, ROM), a random access memory (random access memory, RAM), a magnetic disk, or an optical disc.

## Claims

1. A call method, applied to a first electronic device, wherein a first connection is set up between the first electronic device and a second electronic device, the first electronic device is configured with a subscriber identity module SIM card having a first number, the second electronic device is configured with a SIM card having a second number, and the method comprises:
receiving a first message, wherein the first message indicates a first incoming call; and
when the first message satisfies a first condition:
sending a second message to the second electronic device through the first connection, wherein the second message is for outputting an incoming call notification of the first incoming call on the second electronic device; and
skipping, by the first electronic device, outputting the incoming call notification of the first incoming call, wherein
the first condition comprises that the first message comprises first information indicating that the first incoming call is forwarded from the second number.

2. The method according to claim 1, wherein the method further comprises:
when the first message does not satisfy the first condition, outputting the incoming call notification of the first incoming call on the first electronic device.

3. The method according to claim 1 or 2, wherein the method further comprises:
before the receiving a first message, receiving a third message, wherein the third message comprises the second number; and
before the receiving a first message, sending the first number.

4. The method according to claim 3, wherein the receiving a third message comprises:
receiving the third message sent by the second electronic device through the first connection; and
the sending the first number comprises:
sending the first number to the second electronic device through the first connection.

5. The method according to claim 3, wherein the receiving a third message comprises:
receiving the third message sent by a first network device; and
the sending the first number comprises:
sending the first number to the first network device, wherein the first network device is configured to send the first number to the second electronic device.

6. The method according to claim 5, wherein the receiving the third message sent by a first network device comprises:
when a first address is a preset trusted address, receiving the third message sent by the first network device, wherein the first address is a communication address that is of the first electronic device and that is for implementing the first connection.

7. The method according to claim 6, wherein the trusted address is a communication address of a call forwarding target device set by a user.

8. The method according to any one of claims 5 to 7, wherein the method further comprises:
sending a fourth message to the first network device, wherein the fourth message comprises the first number and the first address, and the first address is the communication address that is of the first electronic device and that is for implementing the first connection.

9. The method according to claim 1 or 2, wherein the first information is a history targeted uniform resource identifier hi-targeted-to-uri or a redirecting party binary-coded decimal number redirecting party BCD number.

10. The method according to claim 3, wherein the third message further comprises a call forwarding type.

11. The method according to claim 10, wherein the call forwarding type comprised in the third message is a first type, and the first condition further comprises that a call forwarding type comprised in the first message is the first type.

12. The method according to claim 1 or 2, wherein the method further comprises:
when the first message satisfies the first condition, and the first connection is broken, outputting the incoming call notification of the first incoming call or rejecting the first incoming call on the first electronic device.

13. The method according to claim 1 or 2, wherein the method further comprises:
receiving a first user operation, wherein the first user operation is for disabling a communication function for implementing the first connection; and
outputting prompt information in response to the first user operation.

14. The method according to claim 1 or 2, wherein the first electronic device is further configured with a SIM card having a third number, and the method further comprises:
receiving a second user operation, wherein the second user operation is for selecting the first number from the first number and the third number.

15. A call method, applied to a second electronic device, wherein a first connection is set up between the second electronic device and a first electronic device, the first electronic device is configured with a subscriber identity module SIM card having a first number, the second electronic device is configured with a SIM card having a second number, and the method comprises:
when the first electronic device receives a first message, and the first message satisfies a first condition, receiving a second message sent by the first electronic device through the first connection, wherein the first message indicates a first incoming call, and the first condition comprises that the first message comprises information indicating that the first incoming call is forwarded from the second number; and
outputting an incoming call notification of the first incoming call based on the second message.

16. The method according to claim 15, wherein the method further comprises:
before the receiving a second message sent by the first electronic device through the first connection, receiving the first number;
sending a third message to a first network device, wherein the third message comprises the first number, the third message is for requesting to implement a first configuration, and the first configuration comprises a call forwarding configuration for forwarding an incoming call for the second number to the first number; and
disabling a cellular communication function.

17. The method according to claim 16, wherein the receiving the first number comprises:
receiving the first number sent by the first electronic device through the first connection; and
the method further comprises:
before the receiving a second message sent by the first electronic device through the first connection, sending the second number to the first electronic device through the first connection.

18. The method according to claim 16, wherein the method further comprises:
before the receiving the first number, sending a fourth message to a second network device, wherein the fourth message comprises a first address, the first address is a communication address that is of the first electronic device and that is for implementing the first connection, and the second network device is configured to send the second number to the first electronic device after receiving the fourth message; and
the receiving the first number comprises:
receiving the first number sent by the second network device.

19. The method according to claim 18, wherein the method further comprises:
receiving a trusted address sent by the second network device; and
the sending a fourth message to a second network device comprises:
when the first address is the trusted address, sending the fourth message to the second network device.

20. The method according to claim 19, wherein the trusted address is a communication address of a call forwarding target device set by a user.

21. The method according to any one of claims 18 to 20, wherein the method further comprises:
sending a fifth message to the second network device, wherein the fifth message comprises a second address and the second number, and the second address is a communication address that is of the second electronic device and that is for implementing the first connection.

22. The method according to claim 16, wherein the method further comprises:
when duration for which the first connection is broken exceeds preset duration, enabling the cellular communication function, and sending a sixth message to the first network device, wherein the sixth message is for requesting to cancel the first configuration.

23. The method according to claim 15 or 16, wherein the method further comprises:
receiving a first user operation, wherein the first user operation is for disabling a communication function for implementing the first connection; and
outputting first prompt information in response to the first user operation.

24. The method according to claim 16, wherein the method further comprises:
receiving a second user operation, wherein the second user operation is for setting up a second connection between the second electronic device and a third electronic device; and
outputting second prompt information in response to the second user operation.

25. The method according to claim 24, wherein the third electronic device is configured with a SIM card having a third number, and the method further comprises:
receiving a third user operation; and
in response to the third user operation, enabling the cellular communication function, and sending a seventh message to the first network device, wherein the seventh message is for requesting to implement a second configuration, and the second configuration comprises a call forwarding configuration for forwarding the incoming call for the second number to the third number.

26. A call method, applied to a first electronic device, wherein a first connection is set up between the first electronic device and a second electronic device, the first electronic device is configured with a subscriber identity module SIM card having a first number, the second electronic device is configured with a SIM card having a second number, and the method comprises:
receiving a first message sent by a first network device, wherein the first message comprises the second number;
sending the first number to the second electronic device, or sending the first number to the first network device, wherein the first network device is configured to send the first number to the second electronic device;
receiving a second message, wherein the second message indicates a first incoming call; and
when the second message satisfies a first condition:
sending a third message to the second electronic device through the first connection, wherein the third message is for outputting an incoming call notification of the first incoming call on the second electronic device; and
skipping, by the first electronic device, outputting the incoming call notification of the first incoming call, wherein
the first condition comprises that the second message comprises first information indicating that the first incoming call is forwarded from the second number.

27. The method according to claim 26, wherein the receiving a first message sent by a first network device comprises:
when a first address is a preset trusted address, receiving the first message sent by the first network device, wherein the first address is a communication address that is of the first electronic device and that is for implementing the first connection.

28. The method according to claim 27, wherein the trusted address is a communication address of a call forwarding target device set by a user.

29. The method according to any one of claims 26 to 28, wherein the method further comprises:
sending a fourth message to the first network device, wherein the fourth message comprises the first number and the first address, and the first address is the communication address that is of the first electronic device and that is for implementing the first connection.

30. The method according to any one of claims 26 to 28, wherein the first information is a history targeted uniform resource identifier hi-targeted-to-uri or a redirecting party binary-coded decimal number redirecting party BCD number.

31. The method according to any one of claims 26 to 28, wherein the first message further comprises a call forwarding type.

32. The method according to claim 31, wherein the call forwarding type comprised in the first message is a first type, and the first condition further comprises that a call forwarding type comprised in the second message is the first type.

33. The method according to any one of claims 26 to 28, wherein the method further comprises:
when the second message satisfies the first condition, and the first connection is broken, outputting the incoming call notification of the first incoming call or rejecting the first incoming call on the first electronic device.

34. The method according to any one of claims 26 to 28, wherein the method further comprises:
when the second message does not satisfy the first condition, outputting the incoming call notification of the first incoming call on the first electronic device.

35. The method according to any one of claims 26 to 28, wherein the method further comprises:
receiving a first user operation, wherein the first user operation is for disabling a communication function for implementing the first connection; and
outputting prompt information in response to the first user operation.

36. The method according to any one of claims 26 to 28, wherein the first electronic device is further configured with a SIM card having a third number, and the method further comprises:
receiving a second user operation, wherein the second user operation is for selecting the first number from the first number and the third number.

37. A call method, applied to a second electronic device, wherein a first connection is set up between the second electronic device and a first electronic device, the first electronic device is configured with a subscriber identity module SIM card having a first number, the second electronic device is configured with a SIM card having a second number, and the method comprises:
sending a first message to a first network device, wherein the first message comprises a first address, and the first address is a communication address that is of the first electronic device and that is for implementing the first connection;
receiving the first number sent by the second electronic device through the first connection, or receiving the first number sent by the first network device;
when the first electronic device receives a second message, and the second message satisfies a first condition, receiving a third message sent by the first electronic device through the first connection, wherein the second message indicates a first incoming call, and the first condition comprises that the second message comprises information indicating that the first incoming call is forwarded from the second number; and
outputting an incoming call notification of the first incoming call based on the third message.

38. The method according to claim 37, wherein the method further comprises:
receiving a trusted address sent by the first network device; and
the sending a first message to a first network device comprises:
when the first address is the trusted address, sending the first message to the first network device.

39. The method according to claim 38, wherein the trusted address is a communication address of a call forwarding target device set by a user.

40. The method according to any one of claims 37 to 39, wherein the method further comprises:
before the receiving a third message sent by the first electronic device through the first connection, sending a fourth message to a second network device, wherein the fourth message comprises the first number, the fourth message is for requesting to implement a first configuration, and the first configuration comprises a call forwarding configuration for forwarding an incoming call for the second number to the first number; and
disabling a cellular communication function.

41. The method according to claim 40, wherein the method further comprises:
when duration for which the first connection is broken exceeds preset duration, enabling the cellular communication function, and sending a fifth message to the second network device, wherein the fifth message is for requesting to cancel the first configuration.

42. The method according to any one of claims 37 to 39, wherein the method further comprises:
sending a sixth message to the first network device, wherein the sixth message comprises the second number and a second address, and the second address is a communication address that is of the second electronic device and that is for implementing the first connection.

43. The method according to any one of claims 37 to 39, wherein the method further comprises:
receiving a first user operation, wherein the first user operation is for disabling a communication function for implementing the first connection; and
outputting first prompt information in response to the first user operation.

44. The method according to claim 40, wherein the method further comprises:
receiving a second user operation, wherein the second user operation is for setting up a second connection between the second electronic device and a third electronic device; and
outputting second prompt information in response to the second user operation.

45. The method according to claim 44, wherein the third electronic device is configured with a SIM card having a third number, and the method further comprises:
receiving a third user operation; and
in response to the third user operation, enabling the cellular communication function, and sending a seventh message to the second network device, wherein the seventh message is for requesting to implement a second configuration, and the second configuration comprises a call forwarding configuration for forwarding the incoming call for the second number to the third number.

46. An electronic device, comprising a transceiver, a processor, and a memory, wherein the memory is configured to store a computer program, and the processor invokes the computer program to perform the method according to any one of claims 1 to 14 or the method according to any one of claims 26 to 36.

47. An electronic device, comprising a transceiver, a processor, and a memory, wherein the memory is configured to store a computer program, and the processor invokes the computer program to perform the method according to any one of claims 15 to 25 or the method according to any one of claims 37 to 45.

48. A call system, comprising a first electronic device and a second electronic device,
wherein a first connection is set up between the first electronic device and the second electronic device, the first electronic device is configured with a subscriber identity module SIM card having a first number, and the second electronic device is configured with a SIM card having a second number, wherein
the first electronic device is configured to perform the method according to any one of claims 1 to 14, and the second electronic device is configured to perform the method according to any one of claims 15 to 25; or
the first electronic device is configured to perform the method according to any one of claims 26 to 36, and the second electronic device is configured to perform the method according to any one of claims 37 to 45.

49. A computer storage medium, wherein the computer storage medium stores a computer program; and when the computer program is executed by a processor, the method according to any one of claims 1 to 45 is implemented.
